# EUROPEAN PATENT SPECIFICATION

(11) **EP 3 672 224 B1**
(45) Date of publication and mention of the grant of the patent: **01.06.2022**
(21) Application number: 18845511.7
(22) Date of filing: 29.06.2018
(51) Int. Cl.: H04N 5/232, H04N 5/225, G01N 21/88, B61D 15/12, H04W 4/02, B61K 9/00, H04N 5/247

(54) **DATA COLLECTION METHOD AND TUNNEL DETECTION VEHICLE**
VERFAHREN ZUR DATENERFASSUNG UND TUNNELDETEKTIONSFAHRZEUG
PROCÉDÉ DE COLLECTE DE DONNÉES ET VÉHICULE DE DÉTECTION DE TUNNEL

(30) Priority: 14.08.2017 CN 201710694763
(43) Date of publication of application: 24.06.2020
(73) Proprietor: Chengdu Zhongxin Huarui Technology Co., Ltd., Chengdu, Sichuan 610000 (CN)
(72) Inventor: QIN, Jun, Chengdu, Sichuan 610000 (CN); QIN, Yue, Chengdu, Sichuan 610000 (CN)
(74) Representative: Vitina, Maruta
(86) International application number: PCT/CN2018/093814
(87) International publication number: WO 2019/033862

(56) References cited:
- EP-A1- 3 062 502
- CN-A- 102 211 590
- CN-A- 104 369 742
- CN-A- 104 914 108
- CN-A- 106 679 723
- CN-A- 107 333 046
- CN-U- 207 340 012
- JP-A- 2009 222 508
- WANG, PINGRANG: "Current Situation and Comparative Analysis of Rapid Detection Technology of Tunnel Diseases", Highways & Automotive Applications, no. 3, 30 June 2016 (2016-06-30), pages 241-245, XP009519425, ISSN: 1671-2668
- AI, Q. et al.: "Acquiring Sectional Profile of Metro Tunnels Using Charge-coupled Device Cameras", Structure and Infrastructure Engineering, vol. 12, no. 9, 4 September 2015 (2015-09-04), pages 1-11, XP055570807, ISSN: 1573-2479

## Description

### CROSS-REFERENCE TO RELATED APPLICATIONS

This application claims priority to Chinese Patent Application No. 201710694763.4 with a filing date of Aug. 14, 2017 and a title of "data acquisition method and tunnel detection vehicle".

### TECHNICAL FIELD

This application relates to the technical field of imaging detection, and particularly relates to a data acquisition method and a tunnel detection vehicle.

### BACKGROUND OF THE PRESENT INVENTION

Railways, highways, subways and other traffic projects have a large number of tunnel projects. After a tunnel is put into operation, quality problems such as leakage, cracking of linings, deformation of the linings and cracking of the road surfaces generally occur, which bring potential safety hazards for vehicle traffic. Therefore, during the operation period of the tunnel, the tunnel needs to be inspected and evaluated for health periodically. Tunnel health problems are included in relevant specifications for maintenance of the highways, the railways and the subways.

In the existing method, an optical camera for acquiring tunnel images is arranged on a detection vehicle; when reaching an image acquisition point, the detection vehicle stops and acquires tunnel images through the optical camera, thereby completing the acquisition of tunnel image data and then realizing tunnel detection. However, this intermittent motion imaging mode has low working efficiency and cannot realize efficient detection of quality of tunnel linings.

CN106697723 discloses a highway tunnel detection vehicle system, comprising a detection vehicle acquisition subsystem, a data management and analysis subsystem, and a WEB display subsystem which are connected in sequence, wherein the detection vehicle acquisition subsystem is installed in a van vehicle to acquire tunnel state data, the data management and analysis subsystem is used for performing image processing on the tunnel state data, and the WEB display subsystem is used for storing and displaying the data processed by the data management and analysis subsystem.

EP3062502 discloses that an image capturing camera unit 1 and a mirror unit 2 are both capable of continuous movement in at least a one-dimensional direction. The image capturing camera unit 1 acquires an image of a physical object present within an object region by directing line of sight direction towards the object region by means of the mirror unit 2. The mirror body 21 changes line of sight from the image capturing camera unit 1. The drive unit 22 successively changes angle of the mirror body 21 in accordance with movement of the image capturing camera unit 1 and the mirror body 21. In this way it is possible to keep line of sight from the image capturing camera unit 1 directed towards a physical object for a given time. The drive unit 22 directs line of sight from the image capturing camera unit 1 towards another object region by driving the mirror body 21. The control unit 3 controls operation of the drive unit 22.

### SUMMARY OF THE PRESENT INVENTION

The purposes of this application include providing a data acquisition method and a tunnel detection vehicle, so as to increase the image acquisition efficiency of the detection vehicle on the basis of ensuring the quality of the acquired images.

To achieve at least one of the above purposes, this application adopts the following technical solution:
This application provides a data acquisition method applied to a tunnel detection vehicle. The tunnel detection vehicle includes a control apparatus and at least one group of imaging apparatuses. The at least one group of imaging apparatuses is electrically connected with the control apparatus. The method includes: the control apparatus controls the at least one group of imaging apparatuses to move in a reciprocating mode along a preset trajectory; when a motion direction of the imaging apparatuses is opposite to a travelling direction of the tunnel detection vehicle, and a difference value between the magnitude of a motion speed of the imaging apparatus and the magnitude of a motion speed of the tunnel detection vehicle is within a preset range, the control apparatus controls the imaging apparatuses to acquire image data of an inner wall of a tunnel.

Further, a step that the control apparatus judges whether to control the imaging apparatuses to acquire the image data of the inner wall of the tunnel includes: the control apparatus controls the imaging apparatuses to move in a reciprocating mode along the preset trajectory according to a preset time period; the control apparatus judges whether the motion time of the imaging apparatuses is within the preset time period; if so, the control apparatus judges that the motion direction of the imaging apparatuses is opposite to the motion direction of the tunnel detection vehicle, and the difference value between the magnitudes of the motion speed is within the preset range, and correspondingly controls the imaging apparatuses to acquire the image data of the inner wall of the tunnel; if not, the control apparatus judges that the motion direction of the imaging apparatuses is the same as the motion direction of the tunnel detection vehicle, or the difference value between the magnitudes of the motion speed is beyond the preset range, and correspondingly controls the imaging apparatuses to be in a non-acquisition state.

Further, a step that the control apparatus judges whether to control the imaging apparatuses to acquire the image data of the inner wall of the tunnel includes: the control apparatus controls the imaging apparatuses to move in a reciprocating mode along the preset trajectory according to a preset time period; the control apparatus judges whether the motion time of the imaging apparatuses 10 is equal to a preset time point; if so, the control apparatus judges that the motion direction of the imaging apparatuses is opposite to the motion direction of the tunnel detection vehicle, and the difference value between the magnitudes of the motion speed is within the preset range, and correspondingly controls the imaging apparatuses to acquire the image data of the inner wall of the tunnel; if not, the control apparatus judges that the motion direction of the imaging apparatuses is the same as the motion direction of the tunnel detection vehicle, or the difference value between the magnitudes of the motion speed is beyond the preset range, and correspondingly controls the imaging apparatuses to be in a non-acquisition state.

Further, n groups of imaging apparatuses are arranged; the control apparatus controls each of the n groups of the imaging apparatuses to move in a reciprocating mode along the corresponding preset trajectories; and the motion phases of the n groups of the imaging apparatuses are successively different by about 360 °/n.

Further, two groups of imaging apparatuses are arranged; the two groups of imaging apparatuses are respectively a first imaging apparatus and a second imaging apparatus; the control apparatus controls the first imaging apparatus to move in a reciprocating mode along a first preset trajectory and the second imaging apparatus to move in a reciprocating mode along a second preset trajectory; the difference between the motion phases of the first imaging apparatus and the second imaging apparatus is about 180°; when the motion direction of the first imaging apparatus is opposite to the motion direction of the tunnel detection vehicle and the difference value between the magnitudes of the motion speed is within the preset range, the control apparatus controls the first imaging apparatus to acquire the first image data of the inner wall of the tunnel; when the motion direction of the first imaging apparatus is the same as the motion direction of the tunnel detection vehicle or the difference value between the magnitudes of the motion speed is beyond the preset range, the control apparatus controls the first imaging apparatus to be in a non-acquisition state; when the motion direction of the second imaging apparatus is opposite to the motion direction of the tunnel detection vehicle and the difference value between the magnitudes of the motion speed is within the preset range, the control apparatus controls the second imaging apparatus to acquire the second image data of the inner wall of the tunnel; and when the motion direction of the second imaging apparatus is the same as the motion direction of the tunnel detection vehicle or the difference value between the magnitudes of the motion speed is beyond the preset range, the control apparatus controls the second imaging apparatus to be in a non-acquisition state.

Further, the time that the direction of the imaging apparatus is opposite to the direction of the tunnel detection vehicle and the difference value between the magnitudes of the motion speed is within the preset range is set to be not shorter than the light sensing time of the imaging apparatus.

Further, in the imaging process of the inner wall of the tunnel by the imaging apparatus, an obtained image can achieve no gap to the inner wall of the tunnel and can satisfy the coverage of a specified overlapping degree and overlapping mode.

Further, each time the imaging apparatus makes a reciprocating motion, the imaging apparatus acquires an image of the inner wall of the tunnel once; and an overlapping area exists between two images acquired by the imaging apparatus for two adjacent times.

This application also provides a tunnel detection vehicle, including a vehicle body, at least one group of imaging apparatuses and a control apparatus. The imaging apparatuses are arranged on the vehicle body; the imaging apparatuses are electrically connected with the control apparatus; the control apparatus is configured to control the imaging apparatuses to move in a reciprocating mode along a preset trajectory; when a travelling direction of the imaging apparatuses is opposite to a travelling direction of the tunnel detection vehicle body, and a difference value between the magnitudes of motion speed is within a preset range, the control apparatus sends an imaging control instruction to the imaging apparatuses; the imaging apparatuses complete imaging; when the motion direction of the imaging apparatuses is the same as the motion direction of the tunnel detection vehicle body or the difference value between the magnitudes of the motion speed is beyond the preset range, the control apparatus controls the imaging apparatuses to be in a non-acquisition state; and the imaging apparatuses are configured to acquire the image data of the inner wall of the tunnel after receiving the imaging control instruction.

Further, the vehicle body is provided with at least one group of tracks; the tracks are arranged along the travelling direction of the vehicle body; each group of the imaging apparatuses corresponds to a group of the tracks; the control apparatus is configured to control the imaging apparatuses to move in a reciprocating mode along the tracks; when the travelling direction of the imaging apparatuses is the same as the travelling direction of the tunnel detection vehicle body and the difference value between the magnitudes of the motion speed is within the preset range, the control apparatus sends an imaging control instruction to the imaging apparatuses; the imaging apparatuses complete imaging; and when the motion direction of the imaging apparatuses is the same as the motion direction of the tunnel detection vehicle body or the difference value between the magnitudes of the motion speed is beyond the preset range, the control apparatus controls the imaging apparatuses to be in a non-acquisition state.

Further, two groups of imaging apparatuses are arranged; the two groups of imaging apparatuses are respectively a first imaging apparatus and a second imaging apparatus; the tracks include a first track and a second track; the first imaging apparatus corresponds to the first track; the second imaging apparatus corresponds to the second track; and the control apparatus is configured to control the first imaging apparatus to move in a reciprocating mode along the first track and the second imaging apparatus to move in a reciprocating mode along the second track, wherein the difference between the motion phases of the first imaging apparatus and the second imaging apparatus is about 180°.

Further, the first track and the second track are symmetrically arranged from front to back or from left to right with respect to the vehicle body.

Further, each group of the imaging apparatuses includes at least one imaging unit and a frame for arranging the imaging unit; the frame is connected with the tracks and can move in a reciprocating mode along the length direction of the tracks; and the imaging unit is electrically connected with the control apparatus.

Further, the frame is cylindrical; a plurality of groups of the imaging apparatuses are dispersedly arranged along the length direction of the frame; each group of the imaging apparatuses includes a plurality of imaging units; and the plurality of imaging units of each group of the imaging apparatuses are dispersedly arranged on the side wall of the frame along the circumferential direction of the frame.

Further, the tunnel detection vehicle also includes a laser ranging apparatus; the laser ranging apparatus is electrically connected with the control apparatus; the laser ranging apparatus is connected with the imaging apparatuses so that the laser ranging apparatus moves in a reciprocating mode together with the imaging apparatuses; the control apparatus is also configured to: send a ranging control instruction to the laser ranging apparatus and send an imaging control instruction to the imaging apparatuses when the travelling direction of the imaging apparatuses is opposite to the travelling direction of the tunnel detection vehicle body and the difference value between the magnitudes of the motion speed is within the preset range; after receiving the ranging control instruction, the laser ranging apparatus emits a laser beam to the inner wall of the tunnel along a preset direction, forms a laser spot on the inner wall of the tunnel, and acquires distance data between a coordinate origin of the laser ranging apparatus to the inner wall of the tunnel; and after receiving the imaging control instruction, the imaging apparatuses synchronously acquire an image of the inner wall of the tunnel with the laser spot.

Further, the laser ranging apparatus includes a plurality of laser ranging units; a plurality of the laser ranging units and a plurality of the imaging units are in one-to-one correspondence; and spots of laser signals emitted by the corresponding laser ranging units are in an area which is set in the imaging area.

Further, the above tunnel detection vehicle also includes a structured light projection apparatus; the structured light projection apparatus is electrically connected with the control apparatus; the structured light projection apparatus is connected with the imaging apparatuses so that the structured light projection apparatus moves in a reciprocating mode together with the imaging apparatuses; the structured light projection apparatus emits structured light and proj ects the structured light to the inner wall of the tunnel at a preset angle; and after receiving the imaging control instruction, the imaging apparatuses acquire an image of the inner wall of the tunnel with the structured light.

Further, an opening is arranged at the bottom of the vehicle body, and the imaging apparatuses can acquire an image of a corresponding area at the bottom of the opening.

Further, the imaging apparatuses can also include a plurality of light path conversion elements; and the light path conversion elements are installed on the frame or the vehicle body, and correspond to the plurality of imaging units.

Compared with the prior art, in the data acquisition method and the tunnel detection vehicle provided by embodiments of this application, the at least one group of imaging apparatuses arranged on the tunnel detection vehicle is controlled to move in a reciprocating mode along the preset trajectory; and when the motion direction of the imaging apparatuses is opposite to the travelling direction of the tunnel detection vehicle, and the difference value between the magnitude of the motion speed of the imaging apparatus and the magnitude of the motion speed of the tunnel detection vehicle is within the preset range, the imaging apparatuses are controlled to acquire the image data of the inner wall of the tunnel. This arrangement can achieve that the imaging apparatuses are in an approximately static state relative to the tunnel at each time of acquiring the image data of the inner wall of the tunnel under the condition that the tunnel detection vehicle walks continuously without stopping, thereby effectively reducing the degree of blurring of the acquired image of the inner wall of the tunnel caused by relative motion between the imaging apparatuses and the tunnel, so that the image acquisition efficiency of the tunnel detection vehicle is increased on the basis of ensuring the quality of the acquired image.

To make the above purposes, features, and advantages of this application easier to understand, preferred embodiments are listed below in conjunction with the accompanying drawings, and described in detail below.

### BRIEF DESCRIPTION OF THE DRAWINGS

To more clearly describe the technical solutions in the embodiments of this application, the drawings required to be used in the embodiments will be simply presented below. It should be understood that, the following drawings only show some embodiments of this application, and thus shall not be considered as a limitation to the scope.
Fig. 1 is a three-dimensional structural schematic diagram of a tunnel detection vehicle provided by the present embodiment;
Fig. 2 is a module block diagram of electrical connection of related components of a tunnel detection vehicle provided by the present embodiment;
Fig. 3 is a speed change curve diagram of an imaging apparatus of a tunnel detection vehicle provided by the present embodiment;
Fig. 4 is a top structural schematic diagram of a tunnel detection vehicle provided by the present embodiment, wherein a vehicle body is provided with an imaging apparatus;
Fig. 5 is a partial structural schematic diagram of an imaging apparatus in a tunnel detection vehicle provided by the present embodiment;
Fig. 6 is a geometric schematic diagram of an imaging unit, a light path conversion element and a frame in an imaging apparatus of a tunnel detection vehicle provided by the present embodiment;
Fig. 7 is a top structural schematic diagram of another tunnel detection vehicle provided by the present embodiment, wherein a vehicle body is provided with two imaging apparatuses and the two imaging apparatuses are arranged symmetrically from front to back on the vehicle body;
Fig. 8 is a top structural schematic diagram of another tunnel detection vehicle provided by the present embodiment, wherein a vehicle body is provided with two imaging apparatuses and the two imaging apparatuses are arranged symmetrically from left to right on the vehicle body;
Fig. 9 is a method flow chart of a data acquisition method provided by the present embodiment;
Fig. 10 is a flow chart of an imaging judgment step of a data acquisition method provided by the present embodiment;
Fig. 11 is another method flow chart of a data acquisition method provided by the present embodiment; and
Fig. 12 is a module block diagram of a data acquisition apparatus provided by the present embodiment.

In the drawings: 1-tunnel detection vehicle; 10-imaging apparatus; 110-frame; 120-imaging unit; 121-lens; 130-light path conversion element; 11-first imaging apparatus; 12-second imaging apparatus; 20-track; 21-first track; 22-second track; 30-vehicle body; 31-vehicle track; 40-control apparatus; 50-laser ranging apparatus; 60-structured light projection apparatus; 70-data acquisition apparatus; 71-motion control module; and 72-image acquisition module.

### DETAILED DESCRIPTION OF THE PRESENT INVENTION

Technical solutions in the embodiments of this application are clearly and fully described below in combination with the drawings in the embodiments of this application.

It should be noted that similar reference numerals and letters indicate similar items in the following drawings. Therefore, once an item is defined in one drawing, the item does not need to be further defined and explained in subsequent drawings.

It should be indicated in the description of this application that terms such as "central", "upper", "lower", "left", "front", "rear", "inner", "outer", etc. indicate direction or position relationships shown based on the drawings, or conventionally placed direction or position relationships of the product of the present invention when used, and are only intended to facilitate the description of this application and the simplification of the description rather than to indicate or imply that the indicated device or element must have a specific direction or constructed and operated in a specific direction, and therefore, shall not be understood as a limitation to this application. In addition, the terms such as "first" and "second" are only used for distinguishing description, rather than being understood to indicate or imply relative importance.

It should also be indicated in the explanation of this application that, unless otherwise specifically regulated and defined, terms such as "arrangement", "connected" and "connection" shall be understood in broad sense. For example, "connection" may refer to direct connection or indirect connection through an intermediate medium or inner communication of two elements. For those ordinary skilled in the art, the specific meanings of the above terms in this application may be understood according to specific conditions.

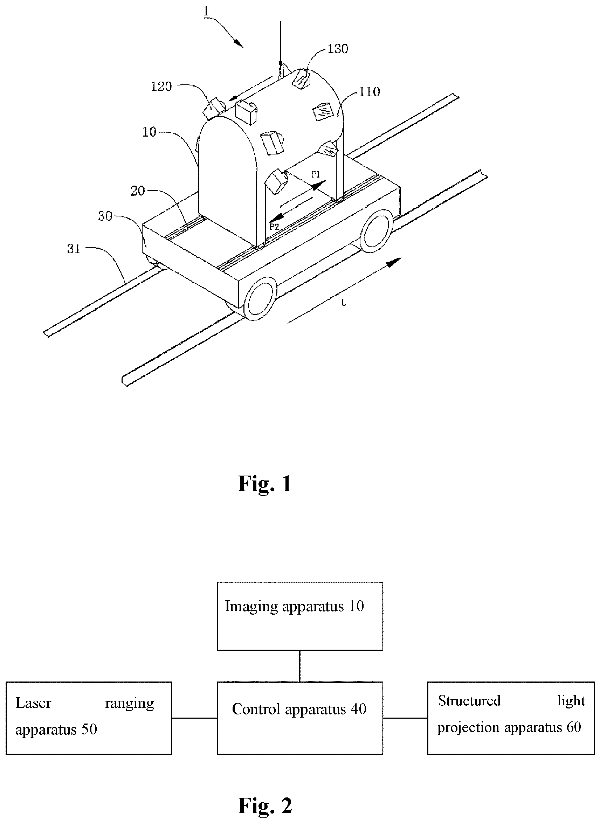

By referring to Fig. 1, embodiments of the present application provide a tunnel detection vehicle 1. As shown in Fig. 1, the tunnel detection vehicle 1 includes a vehicle body 30, at least one group of imaging apparatuses 10 and a control apparatus. The imaging apparatuses 10 and the control apparatus are arranged on the vehicle body 30. In the present embodiment, the imaging apparatuses 10 may be in one group, two groups, four groups or other even groups.

As shown in Fig. 2, the above imaging apparatuses 10 and the control apparatus 40 are electrically connected. The control apparatus 40 is configured to control the imaging apparatuses 10 to move in a reciprocating mode along a preset trajectory. When the motion direction of the imaging apparatuses 10 is opposite to the travelling direction of the vehicle body 30, and the difference value between the magnitude of the motion speed of the imaging apparatus and the magnitude of the motion speed of the vehicle body 30 is within the preset range, the imaging apparatuses 10 are controlled to acquire the image data of the inner wall of the tunnel.

The preset range is a numerical range, which can be set according to the specific requirements of the user for image quality. When the motion direction of the imaging apparatuses 10 is opposite to the travelling direction of the vehicle body 30, and the difference value between the magnitude of the motion speed of the imaging apparatus and the magnitude of the motion speed of the vehicle body 30 is within the preset range, the imaging apparatuses 10 are approximately considered in a static state relative to the tunnel. At this time, the control apparatus 40 controls the imaging apparatuses 10 to acquire the image of the tunnel, so as to effectively reduce the occurrence of blurring of the acquired images due to the relative motion between the imaging apparatuses 10 and the tunnel. Of course, under ideal conditions, when the motion direction of the imaging apparatuses 10 is opposite to the travelling direction of the vehicle body 30, and the magnitude of the motion speed of the imaging apparatuses 10 is equal to the magnitude of the motion speed of the vehicle body 30, the imaging apparatuses 10 are in a static state relative to the tunnel and the imaging apparatuses 10 can acquire clear images of the inner wall of the tunnel.

In the present embodiment, the above preset trajectory can be set as needed, and can be set as a linear trajectory for convenience. Of course, the preset trajectory can also be set as a curved trajectory.

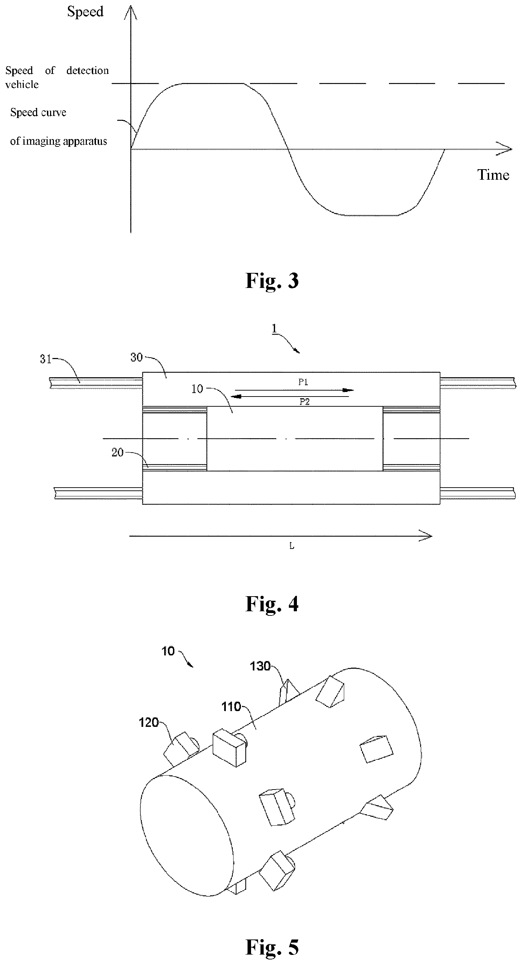

In addition, the above reciprocating motion process can also be set as needed. The reciprocating motion of the imaging apparatuses 10 can include forward motion and reverse motion. The forward motion is the motion from the first end to the second end of the preset trajectory, and the reverse motion is the motion from the second end of the preset trajectory back to the first end. Specifically, the forward motion process includes: making acceleration motion from the first end of the preset trajectory; maintaining the preset speed for making uniform speed motion when the acceleration reaches the preset speed; and then making deceleration motion until the second end of the preset trajectory is reached. The reverse motion process may include: making the acceleration motion from the second end at first and then making deceleration motion back to the first end, or the reverse motion process can be similar to the forward motion process, that is, making the acceleration motion at first from the second end of the preset trajectory; maintaining the speed for uniform motion when the preset speed is reached; and then making the deceleration motion until the first end of the preset trajectory is reached. It should be noted that to simplify the control, as shown in the speed change curve in Fig. 3, during the reverse motion, the speed of the imaging apparatuses 10 can be the same as the speed of the forward motion, and the direction can be opposite to the direction of the forward motion.

In addition to the above change modes of the speed of the imaging apparatuses 10, the motion speed of the imaging apparatuses 10 during imaging can also be within a preset range from the motion speed of the vehicle body 30 by a multi-stage acceleration method. In addition, the control apparatus 40 controls the imaging apparatuses 10 to adjust the speed so that the difference value between the speed and the motion speed of the vehicle body 30 is within the preset range, and the specific speed change mode is not limited.

Specifically, as shown in Fig. 1, a vehicle track 31 may be arranged in the tunnel along the length direction of the tunnel. The bottom of the vehicle body 30 is movably connected with the vehicle track 31 and moves along the length direction of the vehicle track 31. When the vehicle body 30 moves on the vehicle track 31 along the first direction L, the forward motion direction of the imaging apparatuses 10 on the vehicle body 30 is the P1 direction, and the reverse motion direction is the P2 direction, then P1 direction is consistent with the first direction L and the P2 direction is opposite to the first direction L. At this time, when the imaging apparatuses 10 move along the P2 direction in a reverse motion state, and the difference value between the reverse motion speed of the imaging apparatuses 10 and the motion speed of the vehicle body 30 is within the preset range, then the imaging apparatuses 10 and the tunnel are in an approximately relatively static state. At this time, the control apparatus 40 controls the imaging apparatuses 10 to image the tunnel to acquire the image data of the inner wall of the tunnel.

Since the imaging apparatuses 10 have a certain response time, the time during which the imaging apparatuses 10 and the tunnel are in the approximately relatively static state should be greater than the light sensing time of the imaging apparatuses 10. Namely, the duration in which the difference value between the reverse motion speed of the imaging apparatuses 10 and the motion speed of the vehicle body 30 is within the preset range should be greater than the light sensing time of the imaging apparatuses 10. After completing image acquisition, the imaging apparatuses 10 are continuously controlled to move along the P2 direction toward the second end of the preset trajectory. After reaching the second end, the imaging apparatuses 10 are controlled to move forward, that is, move from the second end of the linear trajectory to the first end along the P1 direction. After the imaging apparatuses 10 reach the first end, the next reciprocating motion is started.

In a preferred embodiment of the present application, each time the imaging apparatus 10 makes periodic reciprocating motion, the imaging apparatus acquires an image of the tunnel once; and an overlapping area exists between two images acquired by two adjacent times, which is convenient for obtaining a complete image of the tunnel. When needed, all the imaged targets have lateral stereo models by increasing the overlapping ratio. The reciprocating period of the imaging apparatuses 10 is the acquisition period of the tunnel imaging data. The setting of the acquisition period needs to consider the reciprocating frequency that can be achieved by the imaging apparatuses 10, the overlapping rate of the images acquired by two adjacent times, the response time of the imaging apparatuses 10, the route setting of the preset track, the motion speed of the vehicle body 30, and the motion speed of the imaging apparatuses 10. Specifically, when the maximum repetition frequency that can be achieved by the imaging apparatuses 10 is 5 reciprocations per second, the reciprocation period, that is, the acquisition period, has a minimum value of 0.2 second. The overlapping rate of the images acquired by two adjacent times can be set as 50%; and along the travelling direction of the vehicle body 30, the spacing between center points of imaging areas of two adjacent images is half the width of the imaging areas.

It should be noted that during the imaging of the inner wall of the tunnel by the plurality of groups of imaging apparatuses 10, the images of adjacent imaging apparatuses 10 do not have to have the overlapping areas, and the images obtained by the non-adjacent imaging apparatuses 10 can also cover the tunnel without gap and satisfy the coverage of the specified overlapping degree and overlapping mode.

It should be noted that in order to simplify the motion control of the tunnel detection vehicle 1 and the imaging apparatuses 10, the tunnel detection vehicle 1 may preferably make uniform linear motion along the tunnel extension direction during the tunnel detection work.

Specifically, a track 20 is arranged on the vehicle body 30 so that the imaging apparatuses 10 move along the preset trajectory. The above track may be a slide rail, a ball screw, a magnetic strip line or an optical guide line. It should be noted that when the track is the magnetic strip line or the optical guide line, the imaging apparatuses 10 can be installed on an automated guided vehicle (AGV). The AGV can move along the magnetic stripe line or the optical guide line arranged on the vehicle body 30. In order to reduce the obstruction caused by the image acquisition of the track 20, in the present embodiment, the track 20 may be the slide rail or the ball screw, which is convenient for the imaging apparatuses 10 to acquire images of subgrades, tracks, sleepers, track boards and auxiliary components or road surfaces on the bottom of the tunnel. It should be noted that, in addition to the slide rail or the ball screw 20, the track 20 may also adopt other structures.

Specifically, in addition to being arranged on the bottom of the imaging apparatus 10, the track 20 may also be located on the upper part or side surface of the imaging apparatus 10. The imaging apparatus 10 is in suspended connection or is adjusted to a space not covered by the imaging field of view.

As shown in Fig. 4, at least one group of tracks 20 can be arranged on the vehicle body 30. Each group of imaging apparatuses 10 is connected with a group of tracks 20 so that the imaging apparatuses 10 can move in a reciprocating mode between the first end and the second end of the corresponding track 20. The track 20 has a function of constraining the motion trajectory of the imaging apparatuses 10. The arrangement direction of the track 20 and the spatial relative position relative to the imaging apparatuses 10 can be set according to specific conditions. Specifically, in the present embodiment, the extension direction of the track 20 can be set along the linear traveling direction of the vehicle body 30. Preferably, the extension direction of the track 20 and the linear traveling direction of the vehicle body 30 are perpendicular to the same line cross section. The control apparatus 40 is specifically configured to control the imaging apparatuses 10 to move in a reciprocating mode along the track 20. When the motion direction of the imaging apparatuses 10 is opposite to the travelling direction of the vehicle body 30, and the difference value between the magnitude of the motion speed of the imaging apparatus 10 and the magnitude of the motion speed of the vehicle body is within the preset range, the imaging apparatuses 10 are controlled to acquire the image data of the inner wall of the tunnel.

Specifically, in the present embodiment, each group of tracks 20 may include two guide rails arranged in parallel with each other, and the length directions of the guide rails are consistent with the linear traveling direction of the vehicle body 30. The imaging apparatuses 10 are connected to two guide rails of the same group, and can move in a reciprocating mode along the length direction of the guide rails. The two guide rails are respectively arranged symmetrically in positions of the imaging apparatuses near the left and right sides. When the imaging apparatuses 10 travel along the track 20, the two guide rails of the track 20 respectively limit and guide the positions of the left and the right sides of the imaging apparatuses 10, thereby improving the stability and position accuracy of the imaging apparatuses 10 during the travel. Specifically, the guide rails and the imaging apparatuses 10 can be clamped and matched through a clamping slot and a clamping joint to achieve sliding connection therebetween; or the guide rails and the imaging apparatuses 10 can also realize sliding connection or rolling connection through other structures, as long as they can move relative to each other in the direction of the track 20.

In the present embodiment, as shown in Fig. 5, each group of the imaging apparatuses 10 includes at least one imaging unit 120 that sets a preset shooting direction and a frame 110 for installing the imaging unit 120. The frame 110 is connected with the track 20. The frame 110 can move along the installed track 20. In order to realize the comprehensive detection of the tunnel, a plurality of imaging units 120 can be arranged for each group of the imaging apparatuses 10. In a preferred embodiment of the present application, the shape of the frame 110 may be a prism, a cylinder or a sphere. A plurality of imaging units 120 are distributed on a side wall of the frame 110. The plurality of imaging units 120 are electrically connected with the control apparatus 40. When the image of the inner wall of the tunnel needs to be acquired, the control apparatus 40 can control the plurality of imaging units 120 to image the tunnel. It should be noted that the imaging areas of the tunnel are determined by the distribution of the plurality of imaging units 120. For example, a required number of imaging units 120 can be arranged and the orientation of the lenses 121 of the imaging units 120 can be adjusted as required to complete the imaging of the inner wall and the bottom subgrade of the tunnel or the travelling track of the detection vehicle. It should be noted that when imaging of the bottom subgrade of the tunnel or the travelling track of the detection vehicle is needed, an opening may be formed at the bottom of the vehicle body 30. The imaging units 120 can acquire the images of the subgrades, the tracks, the sleepers, the track boards and the auxiliary devices or the travelling tracks of the corresponding areas at the bottom of the opening through the opening. The imaging units 120 can also be extended to the lower part of the vehicle body 30 through the opening, to acquire the images of the subgrades or the travelling track at the bottom of the vehicle body 30. Specifically, in the present embodiment, the imaging units 120 may include a camera or other shooting devices. The imaging spectral range of the camera and other shooting devices may be the entire wavelength range of electromagnetic waves.

Specifically, the outer wall of the frame 110 may be cylindrical; a plurality of groups of the imaging apparatuses 10 are dispersedly arranged along the length direction of the frame 110; and the plurality of imaging units 120 of each group of the imaging apparatuses 10 are uniformly distributed on the outer wall of the frame along the circumferential direction of the frame 110. The plurality of imaging units 120 of each group of the imaging apparatuses 10 are distributed on the outer wall of the frame 110 along the arc of the frame 110 to form a ring. The plurality of groups of imaging apparatuses 10 are dispersedly distributed along the length direction of the frame 110 to form a plurality of rings. When the imaging apparatuses 10 move to be static relative to the tunnel, the plurality of imaging units 120 of each group of imaging apparatuses 10 are located at the same radial cross section in the length direction of the tunnel; and the plurality of imaging units 120 are dispersedly distributed along the circumferential direction at the cross section, to acquire the images of a circular section of the tunnel. The plurality of groups of imaging apparatuses 10 can form a plurality of annular sections, and the images of the annular sections in the axis direction of the tunnel have a predetermined overlapping ratio.

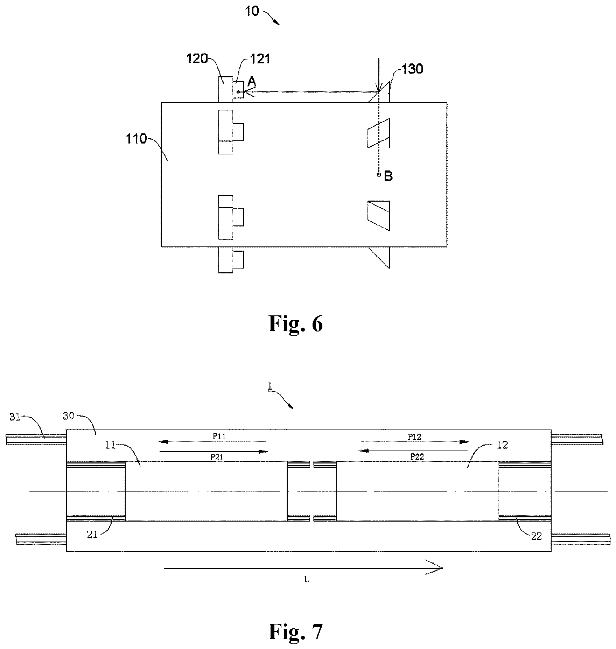

In addition, in order to minimize the occurrence of misalignment of the images acquired by the plurality of imaging units 120 during subsequent splicing and avoid affecting the effect of the obtained panoramic image of the tunnel section, as shown in Fig. 5, the imaging apparatuses 10 may further include light path conversion elements 130. The light path conversion elements 130 are arranged on the frame 110 or the vehicle body 30. Each imaging unit 120 corresponds to one light path conversion element 130; and an optical path length from a lens optical center of each imaging unit 120 to the corresponding light path conversion element 130 is equal to a distance from the light path conversion element 130 to the geometric center or axis of the frame 110. As shown in Fig. 6, each imaging unit 120 has a light center A. The light path can be turned by the light path conversion elements 130 to obtain a virtual light center B corresponding to the light center. The distance from the light center A to a reflector corresponding to the imaging unit 120 may be equal to the distance from the virtual light center B to the reflector. When the distances from the light centers of the plurality of imaging units 120 to the corresponding reflectors are equal so that the virtual light centers of the plurality of imaging units 120 coincide, the distortion problem of "double" same objects that appear in the tunnel imaging areas during later splicing of the panoramic images can be effectively reduced. Specifically, in the present embodiment, the light path conversion elements 130 may be reflectors, triangular prisms, or combinations of the triangular prisms and the reflectors.

In the present embodiment, n groups of imaging apparatuses 10 can be arranged; the control apparatus 40 controls each of the n groups of the imaging apparatuses 10 to move in a reciprocating mode along the corresponding preset trajectories; and the motion phases of the n groups of the imaging apparatuses 10 are successively different by about 360 °/n, so as to reduce the total impulse. The control apparatus 40 simultaneously controls each of the n groups of the imaging apparatuses 10 to move in a reciprocating mode independently. The motion phases of the n groups of the imaging apparatuses 10 are successively different by about 360 °/n. Then, the n groups of the imaging apparatuses 10 complete the reciprocating motion successively. For every 360 °/n of motion, a group of imaging apparatuses 10 is approximately static relative to the tunnel. Namely, during the forward travelling of the vehicle body 30, in one motion cycle of the imaging apparatuses 10, the n groups of imaging apparatuses can perform image acquisition operations for n times on a road section in which the vehicle body 30 is displaced; and time intervals of n times of acquisition of the images are approximately equal. In the independent motion processes of the n groups of imaging apparatuses 10, the impulse is canceled out by each other, so as to reduce the influence of the reciprocating motion of the imaging apparatuses 10 at the vehicle body 30 on the travelling stability of the tunnel detection vehicle 1, thereby improving the stability of the tunnel detection vehicle 1 during travelling.

In the present embodiment, as shown in Fig. 7, two groups of the imaging apparatuses 10 can be specifically arranged; the two groups of imaging apparatuses 10 are respectively a first imaging apparatus 11 and a second imaging apparatus 12; the tracks 20 also include a first track 21 and a second track 22; the first imaging apparatus 11 corresponds to the first track 21; and the second imaging apparatus 12 corresponds to the second track 22. At this time, the control apparatus 40 is specifically configured to control the first imaging apparatus 11 to move in a reciprocating mode along the first track 12 and the second imaging apparatus 12 to move in a reciprocating mode along the second track 22. In order to reduce or avoid the change in the momentum sum of the tunnel detection vehicle 1 caused by the motion of the imaging apparatuses 10 and avoid affecting the smooth motion of the tunnel detection vehicle 1, the difference between the motion phases of the first imaging apparatus 11 and the second imaging apparatus 12 is about 180°. That is, when the first imaging apparatus 11 moves forward (moves along the P21 direction), the second imaging apparatus 12 moves reversely (moves along the P22 direction); and when the first imaging apparatus 11 moves reversely (moves along the P11 direction), the second imaging apparatus 12 moves forward (moves along the P12 direction). The first imaging apparatus and the second imaging apparatus have opposite motion directions and the same magnitude of the motion speed. Under the condition that the quality of the two groups of imaging apparatuses is the same, the momentum sum of the first imaging apparatus 11 and the second imaging apparatus 12 is close to zero, which is beneficial to offset the impulse brought by the motion process of the two groups of imaging apparatuses 10 and effectively ensure the stability of the motion of the tunnel detection vehicle 1. When the motion direction of the first imaging apparatus 11 is opposite to the travelling direction of the vehicle body 30 and the difference value between the magnitude of the motion speed of the first imaging apparatus 11 and the magnitude of the motion speed of the vehicle body 30 is within the preset range, the first imaging apparatus 11 is controlled to acquire the first image data of the tunnel; and when the motion direction of the second imaging apparatus 12 is opposite to the travelling direction of the vehicle body 30 and the difference value between the magnitude of the motion speed of the second imaging apparatus 12 and the magnitude of the motion speed of the vehicle body 30 is within the preset range, the second imaging apparatus 12 is controlled to acquire the second image data of the tunnel and the tunnel detection vehicle 1 can simultaneously obtain two groups of image data. On one hand, the efficiency of image acquisition of the tunnel detection vehicle can be increased; and on the other hand, two groups of imaging apparatuses interact to offset the impulse brought by the motion, so as to effectively improve the stability and the accuracy of the motion of the tunnel detection vehicle 1.

As an embodiment, as shown in Fig. 7, the above first track 21 and the second track 22 can be symmetrically arranged from front to back with respect to the vehicle body 30. Specifically, the first track 21 and the second track 22 can be arranged from front to back along the center line of the vehicle body 30.

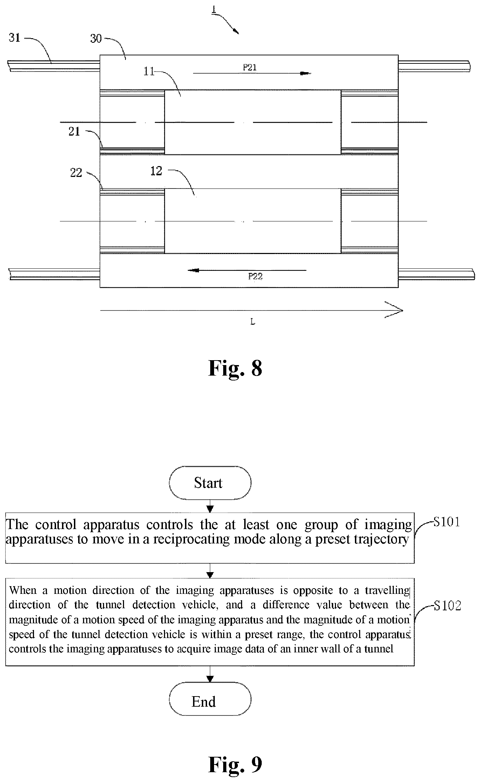

As another embodiment, as shown in Fig. 8, the first track 21 and the second track 22 can also be symmetrically arranged from left to right with respect to the vehicle body 30. Specifically, the first track 21 can be arranged on one side of the vehicle body 30, and the second track 22 can be arranged on the other side of the vehicle body 30. Correspondingly, the first imaging apparatus 11 movably connected with the first track 21 is configured to acquire the image data of the left inner wall of the tunnel; and the second imaging apparatus 12 movably connected with the second track 22 is configured to acquire the image data of the right inner wall of the tunnel. Of course, in other embodiments of this application, on the premise that the data acquisition method provided by this application can be realized, the first track 21 and the second track 22 may also be arranged in another mode other than the above front-back symmetrical arrangement and left-right symmetrical arrangement.

In the present embodiment, as shown in Fig. 2, the tunnel detection vehicle 1 can also include a laser ranging apparatus 50; the laser ranging apparatus 50 is electrically connected with the control apparatus 40; and the laser ranging apparatus 50 can also be connected with the imaging apparatuses 10 so that the laser ranging apparatus 50 moves in a reciprocating mode together with the imaging apparatuses 10. The laser ranging apparatus 50 can be arranged to obtain the distance data between the imaging apparatuses 10 and the inner wall of the tunnel; and the laser ranging apparatus 50 is connected with the imaging apparatuses 10, which solidifies the spatial geometric relationship between the imaging apparatuses 10 and the laser ranging apparatus 50, so as to further improve the accuracy of detection results. It can be understood that the spatial relationship among the coordinate origin of the laser ranging apparatus 50, a spatial pointing angle of a laser beam and the imaging apparatuses 10 is preset.

At this time, the control apparatus 40 is also configured to: synchronously send a ranging control instruction to the laser ranging apparatus 50 and send an imaging control instruction to the imaging apparatuses 10 when the motion direction of the imaging apparatuses 10 is opposite to the travelling direction of the vehicle body 30 and the difference value between the magnitude of the motion speed of the imaging apparatuses 10 and the magnitude of the motion speed of the vehicle body 30 is within the preset range. After receiving the ranging control instruction, the laser ranging apparatus 50 emits a laser beam to the inner wall of the tunnel along a preset direction, forms a laser spot on the inner wall of the tunnel, and acquires the distance data between the coordinate origin of the laser ranging apparatus 50 to the inner wall of the tunnel; and after receiving the imaging control instruction, the imaging apparatuses 10 synchronously acquire the image of the inner wall of the tunnel with the laser spot. In the present embodiment, ranging is synchronized with the image acquisition to ensure that the laser point projected by the laser ranging apparatus 50 on the inner wall of the tunnel is obtained during shooting, so that the laser spot projected by the laser ranging apparatus 50 on the inner wall of the tunnel is recorded on the image of the inner wall of the tunnel acquired by the imaging apparatuses 10. Further, the three-dimensional spatial data of the inner wall of the tunnel can be calculated through the distance data and the image data of the inner wall of the tunnel acquired by the imaging apparatuses 10.

Specifically, the laser ranging apparatus 50 may include a plurality of laser ranging units; and a laser ranging unit is correspondingly arranged at each imaging unit of each group of imaging apparatuses 10. The emission direction of the laser signal emitted by the laser ranging unit may be consistent with the lens orientation of the corresponding imaging unit, so as to obtain the distance data between the imaging area corresponding to the image acquired by the imaging unit and the imaging unit, in order to further calculate the three-dimensional spatial data of the tunnel according to the image data acquired by the imaging apparatuses 10 and the distance data acquired by the laser ranging apparatus 50.

In addition, the tunnel detection vehicle 1 provided by the present embodiment can also include a structured light projection apparatus 60; the structured light projection apparatus 60 is electrically connected with the control apparatus 40; and the structured light projection apparatus 60 is connected with the imaging apparatuses 10 so that the structured light projection apparatus 60 moves in a reciprocating mode together with the imaging apparatuses 10, thereby solidifying the spatial geometric relationship between the imaging apparatuses 10 and the structured light projection apparatus 60. It can be understood that the spatial relationship among the coordinate origin of the structured light projection apparatus 60, a spatial pointing angle and the imaging parameters of the imaging apparatuses 10 is preset. At this time, the tunnel detection vehicle 1 can obtain the three-dimensional space point cloud data of the inner wall of the tunnel through a structured light measurement method. Specifically, the control apparatus 40 controls the imaging apparatuses 10 to move in a reciprocating mode along the preset trajectory. The structured light projection apparatus 60 moves in a reciprocating mode together with the imaging apparatuses 10 and emits structured light and projects the structured light to the inner wall of the tunnel at a preset angle. Specifically, in the present embodiment, the structured light can be linear laser, grid laser, etc. The preset angle can be set according to specific measurement needs.

At this time, when the motion direction of the imaging apparatuses 10 is opposite to the travelling direction of the vehicle body 30 and the difference value between the magnitude of the motion speed of the imaging apparatuses 10 and the magnitude of the motion speed of the vehicle body 30 is within the preset range, the control apparatus 40 sends an imaging control instruction to the imaging apparatuses 10. After the imaging apparatuses 10 receives the imaging control instruction, the imaging apparatuses 10 acquire the image of the inner wall of the tunnel with the structured light, i.e., the imaging apparatuses 10 obtain the structured light image on the tunnel wall while imaging the inner wall of the tunnel, so as to further obtain the three-dimensional contour data of the inner wall of the tunnel according to the distance data acquired by the laser ranging apparatus 50 and the structured light image acquired by the imaging apparatuses 10.

It should be noted that the control apparatus 40 in the present embodiment may include a chip having a data processing function, such as a single chip microcomputer, a DSP, an ARM or an FPGA. In addition, in the present embodiment, the control apparatus 40 may be a vehicle control system that independently controls the vehicle body 30 to travel, or may be integrated with the vehicle control system that controls the vehicle body 30 to travel.

In addition, in a specific implementation mode of the present embodiment, in addition to the above chip having the data processing function, the control apparatus 40 may further include a motor and a transmission mechanism that drive each group of the imaging apparatuses 10 to move. Specifically, the motor drives the imaging apparatuses 10 to move through the transmission mechanism, and controls the imaging apparatuses 10 to make periodic reciprocating motion by controlling the forward and reverse rotation and the rotation speed of the motor. The transmission mechanism can be set according to a required speed change curve. Specifically, the above transmission mechanism may be a cam transmission mechanism. By designing the cam transmission mechanism, the imaging apparatuses 10 can be accelerated from the first end of the preset trajectory. When accelerating to the preset speed, the imaging apparatuses 10 keep the speed for uniform motion, and then decelerate until reaching the second end of the preset trajectory.

It should be noted that the driving apparatus in the control apparatus 40 may use other components in addition to the above motor and transmission mechanism, as long as the imaging apparatuses 10 can be driven to move in a reciprocating mode.

In addition, as shown in Fig. 9, an embodiment of the present application also provides a data acquisition method which is applied to the tunnel detection vehicle 1. The tunnel detection vehicle 1 includes a control apparatus 40 and at least one group of imaging apparatuses 10. The imaging apparatuses 10 are electrically connected with the control apparatus 40. The method includes:
Step S101, the control apparatus 40 controls the imaging apparatuses to move in a reciprocating mode along the preset trajectory.

In this step, the preset trajectory can be set as needed. For convenience, the preset trajectory can be set as a linear trajectory or a curved trajectory. The reciprocating motion can include forward motion and reverse motion. The rate control of the forward motion may be consistent or inconsistent with the rate control of the reverse motion.

As an implementation mode, the imaging apparatuses 10 periodically move in a reciprocating mode along the preset trajectory. At this time, the controlling the at least one group of imaging apparatuses 10 to move in a reciprocating mode along the preset trajectory may specifically include: controlling the at least one group of imaging apparatuses 10 to move in a reciprocating mode along the preset trajectory according to a preset time period.

In addition, it should be noted that during operation, the vehicle body 30 continuously travels along the tunnel extension direction. In order to simplify the speed control of the vehicle body 30 and the imaging apparatuses 10, in a preferred implementation mode of the present embodiment, the vehicle body 30 can be controlled to travel at uniform speed in a straight line. That is, before the step of controlling the imaging apparatuses 10 to move in a reciprocating along the preset trajectory, the data acquisition method provided in the present embodiment can also include: the control apparatus 40 controls the vehicle body 30 to travel at uniform speed in a straight line. Of course, in other implementation modes of the present embodiment, the step that the control apparatus 40 controls the vehicle body 30 to travel at uniform speed can also occur after the step of controlling the imaging apparatuses 10 to move in a reciprocating mode along the preset trajectory, or substantially synchronously, as long as the above imaging conditions are satisfied when imaging.

Step S102, when the motion direction of the imaging apparatuses 10 is opposite to the travelling direction of the vehicle body 30, and the difference value between the magnitude of the motion speed of the imaging apparatus 10 and the magnitude of the motion speed of the vehicle body 30 is within the preset range, the control apparatus 40 controls the imaging apparatuses 10 to acquire the image data of the inner wall of the tunnel.

In each reciprocating motion of each group of the imaging apparatuses 10, when it is judged that the motion direction of the imaging apparatuses 10 is opposite to the travelling direction of the vehicle body 30, and the difference value between the magnitude of the motion speed of the imaging apparatus 10 and the magnitude of the motion speed of the tunnel detection vehicle 1 is within the preset range, the control apparatus 40 controls the imaging apparatuses 10 to acquire the image data of the inner wall of the tunnel.

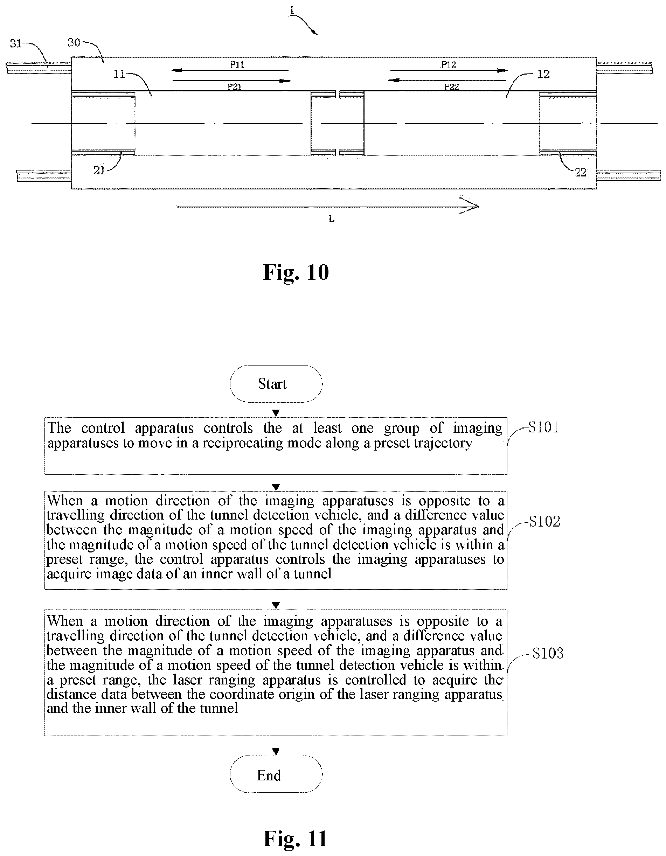

When at least one group of imaging apparatuses 10 moves in a reciprocating mode along the preset trajectory according to a preset time period, as an implementation mode, as shown in Fig. 10, the method may further include an imaging judgment step, and the imaging judgment step may specifically include the following step S201 to step S203. The imaging judgment step occurs before step S102 is performed.

Step S201, the motion time of the imaging apparatuses 10 is obtained.

Step S202, it is judged whether the motion time of the imaging apparatuses 10 is within the preset time period.

Step S203, it is judged that the motion direction of the imaging apparatuses 10 is opposite to the travelling direction of the vehicle body 30, and the difference value between the magnitude of the motion speed of the imaging apparatus 10 and the magnitude of the motion speed of the vehicle body 30 is within the preset range.

The reciprocating motion of the imaging apparatuses 10 and the motion speed of the tunnel detection vehicle 1 are set in advance. Each reciprocating motion, i.e., each reciprocating period, of the imaging apparatuses 10 can ensure within one specific time period that the motion direction of the imaging apparatuses 10 is opposite to the travelling direction of the tunnel detection vehicle 1, and the difference value between the magnitude of the motion speed of the imaging apparatus 10 and the magnitude of the motion speed of the tunnel detection vehicle 1 is within the preset range. Therefore, the preset time period includes a plurality of specific time periods. Each specific time period corresponds to a reciprocating period of the imaging apparatus 10. For example, the reciprocating period of the imaging apparatus 10 is 100 ms, and the duration of the specific time period is 5 ms. It is assumed that counting from 0, 20 ms to 25 ms is a specific time period in the first reciprocating cycle, 120 ms to 125 ms is a specific time period in the second reciprocating cycle, and 220 ms to 225 ms is a specific time period in the third reciprocating cycle, and so on. The imaging apparatus 10 starts the reverse motion from the first end of the preset trajectory, and the motion time is counted from 0. When the motion time of the imaging apparatus 10 is greater than or equal to (100k+20) and less than or equal to (100k+25), it indicates that the motion time of the imaging apparatus 10 is within the preset time period, wherein k is 0 or a positive integer.

If the motion time of the imaging apparatus 10 is within the preset time period, step S203 is executed. If the motion time of the imaging apparatus 10 is beyond the preset time period, returning to step S201 to re-acquire the motion time of the imaging apparatus 10; step S202 is repeatedly executed; and until the motion time of the imaging apparatus 10 is within the preset time period, step S203 is executed.

As another implementation mode, prior to the execution of step S102, it is also judged whether the motion time of the imaging apparatus 10 is equal to the preset time point. If the motion time of the imaging apparatus 10 is equal to the preset time point, it is judged that the motion direction of the imaging apparatuses 10 is opposite to the travelling direction of the vehicle body 30, and the difference value between the magnitude of the motion speed of the imaging apparatus 10 and the magnitude of the motion speed of the vehicle body 30 is within the preset range. For example, the preset time point can be set as the start time point of the above specific time period. When 20 ms to 25 ms is the specific time period in the first reciprocating cycle, 120 ms to 125 ms is the specific time period in the second reciprocating cycle, and 220 ms to 225 ms is the specific time period in the third reciprocating cycle, the preset time point can be set as 20 ms, 120 ms, 220 ms, and so on.

In addition, as another implementation mode, a speed detection apparatus may be arranged on the vehicle body 30 of the tunnel detection vehicle 1. Specifically, the speed detection apparatus may include a first speed sensor and a second speed sensor. The first speed sensor can be arranged on the vehicle body 30 to detect the speed magnitude and direction of the vehicle body 30. The second speed sensor is arranged on the imaging apparatus 10 or a transmitting mechanism thereof. The first speed sensor can acquire the magnitude and direction of the travelling speed of the vehicle body 30 relative to the tunnel, and the second speed sensor can acquire the magnitude and direction of the motion speed of the imaging apparatus 10 relative to the vehicle body 30. For example, the second speed sensor can be arranged at a specific position in the above transmission mechanism to acquire the magnitude and direction of the motion speed of the imaging apparatus 10 relative to the vehicle body 30. At this time, the method of judging that the motion direction of the imaging apparatuses 10 is opposite to the travelling direction of the tunnel detection vehicle 1, and the difference value between the magnitude of the motion speed of the imaging apparatus 10 and the magnitude of the motion speed of the tunnel detection vehicle 1 is within the preset range can also be as follows: the magnitude and direction of the travelling speed of the vehicle body 30 relative to the tunnel is obtained; the magnitude and direction of the motion speed of the imaging apparatus 10 relative to the vehicle body 30 is obtained; it is judged whether the traveling direction of the vehicle body 30 is opposite to the motion speed of the imaging apparatus 10; when the traveling direction of the vehicle body 30 is opposite to the motion speed of the imaging apparatus 10, it is judged whether the difference value between the magnitude of the motion speed of the imaging apparatus 10 and the magnitude of the motion speed of the vehicle body 30 is within the preset range; if the difference value is within the preset range, it is judged that the motion direction of the imaging apparatuses 10 is opposite to the travelling direction of the vehicle body 30, and the difference value between the magnitude of the motion speed of the imaging apparatus 10 and the magnitude of the motion speed of the vehicle body 30 is within the preset range; and step S102 is executed.

In the present embodiment, the specific number of the imaging apparatuses 10 is not limited. Specifically, the imaging apparatuses 10 may be in one group, two groups, four groups, and the like. When the imaging apparatuses 10 include a first imaging device 11 and a second imaging device 12, the above step S101 and step S102 may specifically be as follows: the first imaging apparatus 11 is controlled to move in a reciprocating mode along a first preset trajectory and the second imaging apparatus 12 is controlled to move in a reciprocating mode along a second preset trajectory, wherein the difference between the motion phases of the first imaging apparatus 11 and the second imaging apparatus 12 is about 180°; when the motion direction of the first imaging apparatus 11 is opposite to the travelling direction of the vehicle body 30 and the difference value between the magnitude of the motion speed of the first imaging apparatus 11 and the magnitude of the motion speed of the vehicle body 30 is within the preset range, the first imaging apparatus 11 is controlled to acquire the first image data of the inner wall of the tunnel; when the motion direction of the second imaging apparatus 12 is opposite to the travelling direction of the vehicle body 30 and the difference value between the magnitude of the motion speed of the second imaging apparatus 12 and the magnitude of the motion speed of the vehicle body 30 is within the preset range, the second imaging apparatus 12 is controlled to acquire the second image data of the inner wall of the tunnel.

A laser ranging apparatus 50 can also be arranged on the vehicle body 30. The laser ranging apparatus 50 is electrically connected with the control apparatus 40. The laser ranging apparatus 50 is connected with the imaging apparatuses 10 so that the laser ranging apparatus 50 moves in a reciprocating mode together with the imaging apparatuses 10. At this time, as shown in Fig. 11, the data acquisition method provided by the present embodiment also includes step S103.

Step S103, when the motion direction of the imaging apparatuses 10 is opposite to the travelling direction of the vehicle body 30, and the difference value between the magnitude of the motion speed of the imaging apparatus 10 and the magnitude of the motion speed of the vehicle body 30 is within the preset range, the laser ranging apparatus is controlled to acquire the distance data between the coordinate origin of the laser ranging apparatus and the inner wall of the tunnel.

In addition, when the tunnel detection vehicle 1 provided by the present embodiment also includes a structured light projection apparatus 60, the structured light projection apparatus 60 also moves in a reciprocating mode together with the imaging apparatuses 10, and emits structured light and projects the structured light to the inner wall of the tunnel at a preset angle. When the motion direction of the imaging apparatuses 10 is opposite to the travelling direction of the vehicle body 30, and the difference value between the magnitude of the motion speed of the imaging apparatus 10 and the magnitude of the motion speed of the vehicle body 30 is within the preset range, the control apparatus 40 controls the imaging apparatuses 10 to acquire the image of the inner wall of the tunnel with the structured light, so as to further obtain the three-dimensional contour data of the inner wall of the tunnel according to the distance data acquired by the laser ranging apparatus 50 and the structured light image acquired by the imaging apparatuses 10.

Those skilled in the art can clearly understand that for the convenience and brevity of the illustration, the specific working process of the method described above can refer to the corresponding process in the above device and system embodiments, and is not repeated herein.

In conclusion, in the data acquisition method and the tunnel detection vehicle 1 provided by embodiments of this application, the at least one group of imaging apparatuses 10 arranged on the vehicle body 30 is controlled to move in a reciprocating mode along the preset trajectory; and when the motion direction of the imaging apparatuses 10 is opposite to the travelling direction of the vehicle body 30, and the difference value between the magnitude of the motion speed of the imaging apparatus 10 and the magnitude of the motion speed of the vehicle body 30 is within the preset range, the imaging apparatuses 10 are controlled to acquire the image data of the inner wall of the tunnel. This arrangement can achieve that the imaging apparatuses 10 are in an approximately static state relative to the tunnel at each time of acquiring the image data of the inner wall of the tunnel under the condition that the tunnel detection vehicle 1 walks continuously without stopping, thereby effectively avoiding generating the motion blurring of the acquired image of the inner wall of the tunnel , so that the quality of the acquired image is improved while the image acquisition efficiency of the tunnel detection vehicle 1 is increased.

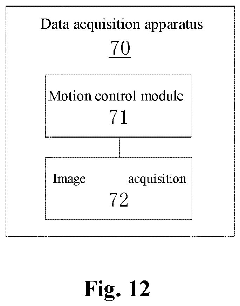

In addition, as shown in Fig. 12, embodiments of the present application also provide a data acquisition device 70 applied to the tunnel detection vehicle 1. The data acquisition device 70 at least includes: a motion control module 71 and an image acquisition module 72.

The motion control module 71 is configured to control the at least one group of imaging apparatuses 10 to move in a reciprocating mode along the preset trajectory. The image acquisition module 72 is configured as follows: when the motion direction of the imaging apparatuses 10 is opposite to the travelling direction of the vehicle body 30, and the difference value between the magnitude of the motion speed of the imaging apparatus 10 and the magnitude of the motion speed of the vehicle body 30 is within the preset range, the control apparatus 40 controls the imaging apparatuses 10 to acquire the image data of the inner wall of the tunnel.

### Industrial Applicability

In the data acquisition method and the tunnel detection vehicle provided by the present embodiment, in the process of continuous travelling of the tunnel detection vehicle in the tunnel, the imaging apparatuses can be periodically in a static state with respect to the tunnel, and acquire the images of the inner wall of the tunnel in the static state. The acquisition of the images has high clarity and high efficiency.

## Claims

1. A data acquisition method, applied to a tunnel detection vehicle (1), wherein the tunnel detection vehicle (1) comprises a control apparatus (40) and at least one group of imaging apparatuses (10); the at least one group of imaging apparatuses (10) is electrically connected with the control apparatus (40); the method comprises:
the control apparatus (40) controls the at least one group of imaging apparatuses (10) to move in a reciprocating mode along a preset trajectory (S101);
when a motion direction of the imaging apparatuses (10) is opposite to a travelling direction of the tunnel detection vehicle (1), and a difference value between the magnitude of a motion speed of the imaging apparatus (10) and the magnitude of a motion speed of the tunnel detection vehicle (1) is within a preset range, the control apparatus (40) controls the imaging apparatuses to acquire image data of an inner wall of a tunnel (S102).

2. The data acquisition method according to claim 1, wherein a step that the control apparatus (40) judges whether to control the imaging apparatuses (10) to acquire the image data of the inner wall of the tunnel comprises:
the control apparatus (40) controls the imaging apparatuses (10) to move in a reciprocating mode along the preset trajectory according to a preset time period;
the control apparatus (40) judges whether the motion time of the imaging apparatuses (10) is within the preset time period; if so, the control apparatus (40) judges that the motion direction of the imaging apparatuses (10) is opposite to the motion direction of the tunnel detection vehicle, and the difference value between the magnitudes of the motion speed is within the preset range, and correspondingly controls the imaging apparatuses (10) to acquire the image data of the inner wall of the tunnel; if not, the control apparatus (40) judges that the motion direction of the imaging apparatuses (10) is the same as the motion direction of the tunnel detection vehicle (1), or the difference value between the magnitudes of the motion speed is beyond the preset range, and correspondingly controls the imaging apparatuses (10) to be in a non-acquisition state.

3. The data acquisition method according to claim 1, wherein a step that the control apparatus (40) judges whether to control the imaging apparatuses (10) to acquire the image data of the inner wall of the tunnel comprises:
the control apparatus (40) controls the imaging apparatuses (10) to move in a reciprocating mode along the preset trajectory according to a preset time period;
the control apparatus (40) judges whether the motion time of the imaging apparatuses (10) is equal to a preset time point; if so, the control apparatus (40) judges that the motion direction of the imaging apparatuses (10) is opposite to the motion direction of the tunnel detection vehicle (1), and the difference value between the magnitudes of the motion speed is within the preset range, and correspondingly controls the imaging apparatuses (10) to acquire the image data of the inner wall of the tunnel; if not, the control apparatus (40) judges that the motion direction of the imaging apparatuses (10) is the same as the motion direction of the tunnel detection vehicle, or the difference value between the magnitudes of the motion speed is beyond the preset range, and correspondingly controls the imaging apparatuses (10) to be in a non-acquisition state.

4. The data acquisition method according to claim 1, wherein the tunnel detection vehicle comprises a speed detection apparatus; the speed detection apparatus is configured to detect the speed of the imaging apparatuses; and the speed detection apparatus is electrically connected with the control apparatus (40);
the step that the control apparatus (40) judges whether to control the imaging apparatuses (10) to acquire the image data of the inner wall of the tunnel comprises:
the control apparatus (40) detects whether the motion direction of the imaging apparatuses is opposite to the motion direction of the tunnel detection vehicle and whether the difference value between the magnitudes of the motion speed is within the preset range through the speed detection apparatus; if so, the control apparatus (40) controls the imaging apparatuses (10) to acquire the image data of the inner wall of the tunnel; if not, the control apparatus (40) controls the imaging apparatuses to be in a non-acquisition state.

5. The data acquisition method according to any one of claims 2-4, wherein n groups of imaging apparatuses (10) are arranged; the control apparatus (40) controls each of the n groups of the imaging apparatuses (10) to move in a reciprocating mode along the corresponding preset trajectories; and the motion phases of the n groups of the imaging apparatuses (10) are successively different by about 360 °/n.

6. The data acquisition method according to any one of claims 15, wherein the time that the direction of the imaging apparatus (10) is opposite to the direction of the tunnel detection vehicle and the difference value between the magnitudes of the motion speed is within the preset range is set to be not shorter than the light sensing time of the imaging apparatus.

7. A tunnel detection vehicle (1), applied to the data acquisition method of any one of claims 16,
comprising a vehicle body (30), at least one group of imaging apparatuses (10) and a control apparatus (40), wherein the imaging apparatuses (10) are arranged on the vehicle body (30); the imaging apparatuses (10) are electrically connected with the control apparatus (40);
the control apparatus (40) is configured to control the imaging apparatuses to move in a reciprocating mode along a preset trajectory; when a travelling direction of the imaging apparatuses (10) is opposite to a travelling direction of the tunnel detection vehicle body (30), and a difference value between the magnitudes of motion speed is within a preset range, the control apparatus (40) sends an imaging control instruction to the imaging apparatuses (10); the imaging apparatuses (10) complete imaging; when the motion direction of the imaging apparatuses (10) is the same as the motion direction of the tunnel detection vehicle body or the difference value between the magnitudes of the motion speed is beyond the preset range, the control apparatus (40) controls the imaging apparatuses (10) to be in a non-acquisition state;
the imaging apparatuses (10) are configured to acquire the image data of the inner wall of the tunnel after receiving the imaging control instruction.

8. The tunnel detection vehicle (1) according to claim 7,
wherein the vehicle body (30) is provided with at least one group of tracks; the tracks are arranged along the travelling direction of the vehicle body (30); each group of the imaging apparatuses (10) corresponds to a group of the tracks;
the control apparatus (40) is configured to control the imaging apparatuses (10) to move in a reciprocating mode along the tracks; when the travelling direction of the imaging apparatuses is the same as the travelling direction of the tunnel detection vehicle body and the difference value between the magnitudes of the motion speed is within the preset range, the control apparatus (40) sends an imaging control instruction to the imaging apparatuses (10); the imaging apparatuses (10) complete imaging; and when the motion direction of the imaging apparatuses (10) is the same as the motion direction of the tunnel detection vehicle body (30) or the difference value between the magnitudes of the motion speed is beyond the preset range, the control apparatus (40) controls the imaging apparatuses (10) to be in a non-acquisition state.

9. The tunnel detection vehicle (1) according to claim 7 or 8
, wherein two groups of imaging apparatuses are arranged; the two groups of imaging apparatuses are respectively a first imaging apparatus (10) and a second imaging apparatus (10); the tracks comprise a first track and a second track; the first imaging apparatus corresponds to the first track; the second imaging apparatus corresponds to the second track;
the control apparatus (40) is configured to control the first imaging apparatus to move in a reciprocating mode along the first track and the second imaging apparatus to move in a reciprocating mode along the second track, wherein the difference between the motion phases of the first imaging apparatus and the second imaging apparatus is about 180°.

10. The tunnel detection vehicle according to any one of claims 8 or 9 , wherein
each group of the imaging apparatuses (10) comprises at least one imaging unit (120) and a frame (110) for arranging the imaging unit (120); the frame (110) is connected with the tracks and can move in a reciprocating mode along the length direction of the tracks; and the imaging unit (120) is electrically connected with the control apparatus.

11. The tunnel detection vehicle (1) according to claim 10,
wherein the frame (110) is cylindrical; a plurality of groups of the imaging apparatuses are dispersedly arranged along the length direction of the frame (110); each group of the imaging apparatuses comprises a plurality of imaging units (120); and the plurality of imaging units (120) of each group of the imaging apparatuses are dispersedly arranged on the side wall of the frame (110) along the circumferential direction of the frame (110).

12. The tunnel detection vehicle (1) according to claim 10 or 11,
wherein the tunnel detection vehicle also comprises a laser ranging apparatus (50); the laser ranging apparatus (50) is electrically connected with the control apparatus; the laser ranging apparatus (50) is connected with the imaging apparatuses so that the laser ranging apparatus (50) moves in a reciprocating mode together with the imaging apparatuses;
the control apparatus is also configured to: send a ranging control instruction to the laser ranging apparatus and send an imaging control instruction to the imaging apparatuses when the travelling direction of the imaging apparatuses is opposite to the travelling direction of the tunnel detection vehicle body and the difference value between the magnitudes of the motion speed is within the preset range; after receiving the ranging control instruction, the laser ranging apparatus emits a laser beam to the inner wall of the tunnel along a preset direction, forms a laser spot on the inner wall of the tunnel, and acquires distance data between a coordinate origin of the laser ranging apparatus to the inner wall of the tunnel;
after receiving the imaging control instruction, the imaging apparatuses synchronously acquire an image of the inner wall of the tunnel with the laser spot.

13. The tunnel detection vehicle (1) according to claim 12,
wherein the laser ranging apparatus (50) comprises a plurality of laser ranging units; a plurality of the laser ranging units and a plurality of the imaging units are in one-to-one correspondence; and spots of laser signals emitted by the corresponding laser ranging units are in an area which is set in the imaging area.

14. The tunnel detection vehicle (1) according to any one of claims 7-13,
wherein the tunnel detection vehicle (1) also comprises a structured light projection apparatus (60); the structured light projection apparatus (60) is electrically connected with the control apparatus; the structured light projection apparatus (60) is connected with the imaging apparatuses so that the structured light projection apparatus moves in a reciprocating mode together with the imaging apparatuses;
the structured light projection apparatus (60) emits structured light and projects the structured light to the inner wall of the tunnel at a preset angle;
after receiving the imaging control instruction, the imaging apparatuses acquire an image of the inner wall of the tunnel with the structured light.

15. The tunnel detection vehicle (1) according to any one of claims 10 or 11
wherein the imaging apparatuses can also comprise a plurality of light path conversion elements; and the light path conversion elements are installed on the frame or the vehicle body, and correspond to the plurality of imaging units.

## Patentansprüche

1. Datenerfassungsverfahren für ein Tunnelerfassungsfahrzeug (1), wobei das Tunnelerfassungsfahrzeug (1) eine Steuervorrichtung (40) und mindestens eine Gruppe von Abbildungsvorrichtungen (10) umfasst, wobei die mindestens eine Gruppe von Abbildungsvorrichtungen (10) elektrisch mit der Steuervorrichtung (40) verbunden ist; wobei das Verfahren umfasst:
die Steuervorrichtung (40) die mindestens eine Gruppe von Abbildungsvorrichtungen (10) steuert, um sich in einem Hin- und Herbewegungsmodus entlang einer voreingestellten Trajektorie (S101) zu bewegen;
wenn eine Bewegungsrichtung der Abbildungsvorrichtungen (10) entgegengesetzt zu einer Fahrtrichtung des Tunnelerfassungsfahrzeugs (1) ist und ein Differenzwert zwischen der Größe einer Bewegungsgeschwindigkeit der Abbildungsvorrichtungen (10) und der Größe einer Bewegungsgeschwindigkeit des Tunnelerfassungsfahrzeugs (1) innerhalb eines voreingestellten Bereichs liegt, steuert die Steuervorrichtung (40) die Abbildungsvorrichtungen, um Bilddaten einer Innenwand eines Tunnels (S102) zu erfassen.

2. Datenerfassungsverfahren nach Anspruch 1, wobei ein Schritt, in dem die Steuervorrichtung (40) beurteilt, ob die Abbildungsvorrichtungen (10) zu steuern sind, um die Bilddaten der Innenwand des Tunnels zu erfassen, umfasst:
die Steuervorrichtung (40) die Abbildungsvorrichtungen (10) steuert, um sich in einem Hin- und Herbewegungsmodus entlang der voreingestellten Trajektorie gemäß einer voreingestellten Zeitperiode zu bewegen;
die Steuervorrichtung (40) beurteilt, ob die Bewegungszeit der Abbildungsvorrichtungen (10) innerhalb der voreingestellten Zeitperiode liegt; wenn dies der Fall ist, beurteilt die Steuervorrichtung (40), dass die Bewegungsrichtung der Abbildungsvorrichtungen (10) entgegengesetzt zur Bewegungsrichtung des Tunnelerfassungsfahrzeugs ist und der Differenzwert zwischen den Größen der Bewegungsgeschwindigkeiten innerhalb des voreingestellten Bereichs liegt, und steuert dementsprechend die Abbildungsvorrichtungen (10), um die Bilddaten der Innenwand des Tunnels zu erfassen; wenn dies nicht der Fall ist, beurteilt die Steuervorrichtung (40), dass die Bewegungsrichtung der Abbildungsvorrichtungen (10) dieselbe wie die Bewegungsrichtung des Tunnelerfassungsfahrzeugs (1) ist oder der Differenzwert zwischen den Größen der Bewegungsgeschwindigkeiten außerhalb des voreingestellten Bereichs liegt, und steuert dementsprechend die Abbildungsvorrichtungen (10) so, dass sie sich in einem Nicht-Erfassungszustand befinden.

3. Datenerfassungsverfahren nach Anspruch 1, wobei ein Schritt, in dem die Steuervorrichtung (40) beurteilt, ob die Abbildungsvorrichtungen (10) zu steuern sind, um die Bilddaten der Innenwand des Tunnels zu erfassen, umfasst:
die Steuervorrichtung (40) die Abbildungsvorrichtungen (10) steuert, um sich in einem Hin- und Herbewegungsmodus entlang der voreingestellten Trajektorie gemäß einer voreingestellten Zeitperiode zu bewegen;
die Steuervorrichtung (40) beurteilt, ob die Bewegungszeit der Abbildungsvorrichtungen (10) gleich wie dem voreingestellten Zeitpunkt ist; wenn dies der Fall ist, beurteilt die Steuervorrichtung (40), dass die Bewegungsrichtung der Abbildungsvorrichtungen (10) entgegengesetzt zur Bewegungsrichtung des Tunnelerfassungsfahrzeugs (1) ist, und der Differenzwert zwischen den Größen der Bewegungsgeschwindigkeiten innerhalb des voreingestellten Bereichs liegt, und steuert dementsprechend die Abbildungsvorrichtungen (10), um die Bilddaten der Innenwand des Tunnels zu erfassen; wenn nicht, beurteilt die Steuervorrichtung (40), dass die Bewegungsrichtung der Abbildungsvorrichtungen (10) die gleiche wie die Bewegungsrichtung des Tunnelerfassungsfahrzeugs ist, oder der Differenzwert zwischen den Größen der Bewegungsgeschwindigkeiten außerhalb des voreingestellten Bereichs liegt, und steuert dementsprechend die Abbildungsvorrichtungen (10) so, dass sie sich in einem Nicht-Erfassungszustand befinden.

4. Datenerfassungsverfahren nach Anspruch 1, wobei das Tunnelerfassungsfahrzeug eine Geschwindigkeitserkennungsvorrichtung umfasst, die so konfiguriert ist, dass sie die Geschwindigkeit der Abbildungsvorrichtungen erfasst; wobei die Geschwindigkeitserkennungsvorrichtung elektrisch mit der Steuervorrichtung (40) verbunden ist;
der Schritt, in dem die Steuervorrichtung (40) beurteilt, ob die Abbildungsvorrichtungen (10) gesteuert werden sollen, um die Bilddaten der Innenwand des Tunnels zu erfassen, umfasst:
die Steuervorrichtung (40) erkennt, ob die Bewegungsrichtung der Abbildungsvorrichtungen der Bewegungsrichtung des Tunnelerfassungsfahrzeugs entgegengesetzt ist und ob der Differenzwert zwischen den Größen der Bewegungsgeschwindigkeit innerhalb des voreingestellten Bereichs durch die Geschwindigkeitserkennungsvorrichtung liegt; wenn dies der Fall ist, steuert die Steuervorrichtung (40) die Abbildungsvorrichtungen (10), um die Bilddaten der Innenwand des Tunnels zu erfassen; wenn dies nicht der Fall ist, steuert die Steuervorrichtung (40) die Abbildungsvorrichtungen so, dass sie sich in einem Nicht-Erfassungszustand befinden.

5. Datenerfassungsverfahren nach einem der Ansprüche 2 bis 4, wobei n Gruppen von Abbildungsvorrichtungen (10) angeordnet sind; wobei die Steuervorrichtung (40) jede der n Gruppen der Abbildungsvorrichtungen (10) steuert, um sich in einem Hin- und Herbewegungsmodus entlang der entsprechenden voreingestellten Trajektorien zu bewegen; und die Bewegungsphasen der n Gruppen der Abbildungsvorrichtungen (10) aufeinanderfolgend um etwa 360 °/n unterschiedlich sind.

6. Datenerfassungsverfahren nach einem der Ansprüche 1 bis 5, wobei die Zeit, in der die Richtung der aufeinanderfolgend (10) der Richtung des Tunnelerfassungsfahrzeugs entgegengesetzt ist und der Differenzwert zwischen den Größen der Bewegungsgeschwindigkeiten innerhalb des voreingestellten Bereichs liegt, so eingestellt ist, dass sie nicht kürzer als die Lichtsensorzeit der Abbildungsvorrichtungen ist.

7. Tunnelerfassungsfahrzeug (1), das auf das Datenerfassungsverfahren nach einem der Ansprüche 1 bis 6 verwendet wird, umfassend eine Fahrzeugkarosserie (30), mindestens einer Gruppe von Abbildungsvorrichtungen (10) und eine Steuervorrichtung (40), wobei die Abbildungsvorrichtungen (10) an der Fahrzeugkarosserie (30) angeordnet sind und die Abbildungsvorrichtungen (10) elektrisch mit der Steuervorrichtung (40) verbunden sind;
wobei die Steuervorrichtung (40) so konfiguriert ist, dass sie die Abbildungsvorrichtungen so steuert, dass sie sich in einem Hin- und Herbewegungsmodus entlang einer voreingestellten Trajektorie bewegen; wenn eine Bewegungsrichtung der Abbildungsvorrichtungen (10) entgegengesetzt zu einer Bewegungsrichtung der Fahrzeugkarosserie (30) ist und ein Differenzwert zwischen den Größen der Bewegungsgeschwindigkeiten innerhalb eines voreingestellten Bereichs liegt, sendet die Steuervorrichtung (40) eine Abbildungssteueranweisung an die Abbildungsvorrichtungen (10); wobei die Abbildungsvorrichtungen (10) die Abbildung abschließen; wenn die Bewegungsrichtung der Abbildungsvorrichtungen (10) die gleiche wie die Bewegungsrichtung des Tunnelerfassungsfahrzeugskörpers ist oder der Differenzwert zwischen den Größen der Bewegungsgeschwindigkeit außerhalb des voreingestellten Bereichs liegt, steuert die Steuervorrichtung (40) die Abbildungsvorrichtungen (10) so, dass sie sich in einem Nicht-Erfassungszustand befinden;
wobei die Abbildungsvorrichtungen (10) so konfiguriert sind, dass sie die Bilddaten der Innenwand des Tunnels erfassen, nachdem sie die Abbildungssteueranweisung empfangen haben.

8. Tunnelerfassungsfahrzeug (1) nach Anspruch 7, wobei die Fahrzeugkarosserie (30) mit mindestens einer Gruppe von Trajektorie versehen ist, wobei die Trajektorie entlang der Fahrtrichtung der Fahrzeugkarosserie (30) angeordnet sind, wobei jede Gruppe der Abbildungsvorrichtungen (10) einer Gruppe der Trajektorie entspricht;
wobei die Steuervorrichtung (40) so konfiguriert ist, dass sie die Abbildungsvorrichtungen (10) so steuert, dass sie sich in einem Hin- und Herbewegungsmodus entlang der Trajektorie bewegen; wobei die Steuervorrichtung (40) einen Abbildungsteuerbefehl an die Abbildungsvorrichtungen (10) sendet, wenn die Bewegungsrichtung der Abbildungsvorrichtungen gleiche wie die Bewegungsrichtung des Tunnelerfassungsfahrzeugskörpers ist und der Differenzwert zwischen den Größen der Bewegungsgeschwindigkeiten innerhalb des voreingestellten Bereichs liegt; wobei die Abbildungsvorrichtungen (10) die Abbildung abschließen; und wenn die Bewegungsrichtung der Abbildungsvorrichtungen (10) gleiche wie die Bewegungsrichtung der Fahrzeugkarosserie (30) ist oder der Differenzwert zwischen den Größen der Bewegungsgeschwindigkeit außerhalb des voreingestellten Bereichs liegt, steuert die Steuervorrichtung (40) die Abbildungsvorrichtungen (10) so, dass sie sich in einem Nicht-Erfassungszustand befinden.

9. Tunnelerfassungsfahrzeug (1) nach Anspruch 7 oder 8, wobei zwei Gruppen von Abbildungsvorrichtungen angeordnet sind; wobei die beiden Gruppen von Abbildungsvorrichtungen jeweils eine erste Abbildungsvorrichtung (10) und eine zweite Abbildungsvorrichtung (10) sind; wobei die Trajektorien eine erste Trajektorie und eine zweite Trajektorie umfassen; wobei die erste Abbildungsvorrichtung der ersten Trajektorie entspricht und die zweite Abbildungsvorrichtung der zweiten Trajektorie entspricht;
wobei die Steuervorrichtung (40) so konfiguriert ist, dass sie die erste Abbildungsvorrichtung so steuert, dass sie sich in einem Hin- und Herbewegungsmodus entlang der ersten Trajektorie bewegt, und die zweite Abbildungsvorrichtung so steuert, dass sie sich in einem Hin- und Herbewegungsmodus entlang der zweiten steuert bewegt, wobei die Differenz zwischen den Bewegungsphasen der ersten Abbildungsvorrichtung und der zweiten Abbildungsvorrichtung etwa 180° beträgt.

10. Tunnelerfassungsfahrzeug nach einem der Ansprüche 8 oder 9, wobei jede Gruppe der Abbildungsvorrichtung (10) mindestens eine Abbildungeinheit (120) und einen Rahmen (110) zum Anordnen der Abbildungseinheit (120) umfasst; wobei der Rahmen (110) mit den Trajektorie verbunden ist und sich in einem Hin- und Herbewegungsmodus entlang der Längsrichtung der Trajektorie bewegen kann; und wobei die Abbildungsvorrichtung (120) elektrisch mit der Steuereinrichtung verbunden ist.

11. Tunnelerfassungsfahrzeug (1) nach Anspruch 10, wobei der Rahmen (110) zylindrisch ist; wobei eine Vielzahl von Gruppen der Abbildungsvorrichtung entlang der Längsrichtung des Rahmens (110) verteilt angeordnet sind; wobei jede Gruppe der Abbildungsvorrichtung eine Vielzahl von Abbildungseinheiten (120) umfasst; und wobei die Vielzahl der Abbildungseinheiten (120) jeder Gruppe der Abbildungsvorrichtung an der Seitenwand des Rahmens (110) entlang der Umfangsrichtung des Rahmens (110) verteilt angeordnet sind.

12. Tunnelerfassungsfahrzeug (1) nach Anspruch 10 oder 11, wobei das Tunnelerfassungsfahrzeug auch eine Laser-Entfernungsmessvorrichtung (50) umfasst; wobei die Laser-Entfernungsmessvorrichtung (50) elektrisch mit der Steuervorrichtung verbunden ist; wobei die Laser-Entfernungsmessvorrichtung (50) mit den Abbildungsvorrichtungen verbunden ist, so dass sich die Laser-Entfernungsmessvorrichtung (50) zusammen mit den Abbildungsvorrichtungen hin- und herbewegt;
die Steuervorrichtung auch so konfiguriert ist: Senden eines Entfernungssteuerungsbefehls an die Laser-Entfernungsmessvorrichtung und Senden eines Abbildungssteuerungsbefehls an die Abbildungsvorrichtungen, wenn die Fahrtrichtung der Abbildungsvorrichtungen der Fahrtrichtung des Tunnelerfassungsfahrzeugkörpers entgegengesetzt ist und der Differenzwert zwischen den Größen der Bewegungsgeschwindigkeit innerhalb des voreingestellten Bereichs liegt; wobei nach dem Empfangen des Entfernungssteuerungsbefehls die Laser-Entfernungsmessvorrichtung einen Laserstrahl entlang einer voreingestellten Richtung zur Innenwand des Tunnels aussendet, einen Laserpunkt auf der Innenwand des Tunnels bildet und Abstandsdaten zwischen einem Koordinatenursprung der Laser-Entfernungsmessvorrichtung und der Innenwand des Tunnels erfasst;
wobei nach Empfang des Bildsteuerungsbefehls die Abbildungsvorrichtungen synchron ein Bild der Innenwand des Tunnels mit dem Laserpunkt aufnehmen.

13. Tunnelerfassungsfahrzeug (1) nach Anspruch 12, wobei die Laser-Entfernungsmessvorrichtung (50) eine Vielzahl von Laser-Entfernungsmessvorrichtung umfasst; wobei eine Vielzahl der Laser-Entfernungsmessvorrichtung und eine Vielzahl der Abbildungseinheiten in eins-zu-eins-Entsprechung stehen; und wobei Punkte von Lasersignalen, die von den entsprechenden Laserentfernungsmesseinheiten emittiert werden, sich in einem Bereich befinden, der im Abbildungsbereich festgelegt ist.

14. Tunnelerfassungsfahrzeug (1) nach einem der Ansprüche 7 bis 13, wobei das Tunnelerfassungsfahrzeug (1) auch eine Projektionsvorrichtung (60) für strukturiertes Licht umfasst; wobei die Projektionsvorrichtung (60) für strukturiertes Licht elektrisch mit der Steuervorrichtung verbunden ist; wobei die Projektionsvorrichtung (60) für strukturiertes Licht mit den Abbildungsvorrichtung verbunden ist, so dass sich die Projektionsvorrichtung für strukturiertes Licht zusammen mit den Abbildungsvorrichtung hin und her bewegt;
wobei die Projektionsvorrichtung (60) für strukturiertes Licht strukturiertes Licht ausstrahlt und das strukturierte Licht in einem voreingestellten Winkel auf die Innenwand des Tunnels projiziert;
wobei die Abbildungsvorrichtungen nach Empfang der Abbildungssteueranweisung ein Bild der Innenwand des Tunnels mit dem strukturierten Licht erfassen.

15. Tunnelerfassungsfahrzeug (1) nach einem der Ansprüche 10 oder 11, wobei die Abbildungsvorrichtungen auch eine Vielzahl von Lichtweg-Umwandlungselementen umfassen können, wobei die Lichtweg-Umwandlungselemente am Rahmen oder an der Fahrzeugkarosserie installiert sind und der Vielzahl von Abbildungseinheiten entsprechen.

## Revendications

1. Procédé d'acquisition de données, appliqué à un véhicule de détection de tunnel (1), dans lequel ledit véhicule de détection de tunnel (1) comprend un appareil de commande (40) et au moins un groupe d'appareils d'imagerie (10); ledit au moins un groupe d'appareils d'imagerie (10) est connecté électriquement audit appareil de commande (40); ledit procédé comprend:
ledit appareil de commande (40) commande ledit au moins un groupe d'appareils d'imagerie (10) pour se déplacer dans un mode alternatif le long d'une trajectoire prédéfinie (S101);
lorsqu'une direction de mouvement desdits appareils d'imagerie (10) est opposée à une direction de déplacement dudit véhicule de détection de tunnel (1), et une valeur de différence entre l'amplitude d'une vitesse de mouvement dudit appareil d'imagerie (10) et l'amplitude d'un mouvement la vitesse dudit véhicule de détection de tunnel (1) est dans une plage prédéfinie, ledit appareil de commande (40) commande lesdits appareils d'imagerie pour acquérir des données d'image d'une paroi intérieure d'un tunnel (S102).

2. Ledit procédé d'acquisition de données selon la revendication 1, dans lequel une étape dans laquelle ledit appareil de commande (40) juge s'il faut commander lesdits appareils d'imagerie (10) pour acquérir lesdites données d'image de ladite paroi intérieure dudit tunnel comprend:
ledit appareil de commande (40) commande lesdits appareils d'imagerie (10) pour se déplacer dans un mode alternatif le long de ladite trajectoire prédéfinie selon une période de temps prédéfinie;
ledit appareil de commande (40) juge si le temps de mouvement desdits appareils d'imagerie (10) se situe dans ladite période de temps prédéfinie; si c'est le cas, ledit appareil de commande (40) juge que ladite direction de mouvement desdits appareils d'imagerie (10) est opposée à ladite direction de mouvement dudit véhicule de détection de tunnel, et ladite valeur de différence entre lesdites amplitudes de ladite vitesse de mouvement est dans ladite plage prédéfinie, et commande en conséquence lesdits appareils d'imagerie (10) pour acquérir lesdites données d'image de ladite paroi intérieure dudit tunnel; sinon, ledit appareil de commande (40) juge que ladite direction de mouvement desdits appareils d'imagerie (10) est identique à ladite direction de mouvement dudit véhicule de détection de tunnel (1), ou ladite valeur de différence entre lesdites amplitudes de ladite vitesse de mouvement est au-delà ladite plage prédéfinie, et commande en conséquence lesdits appareils d'imagerie (10) pour qu'ils soient dans un état de non-acquisition.

3. Ledit procédé d'acquisition de données selon la revendication 1, dans lequel une étape dans laquelle ledit appareil de commande (40) juge s'il faut commander lesdits appareils d'imagerie (10) pour acquérir lesdites données d'image de ladite paroi intérieure dudit tunnel comprend:
ledit appareil de commande (40) commande lesdits appareils d'imagerie (10) pour se déplacer dans un mode alternatif le long de ladite trajectoire prédéfinie selon une période de temps prédéfinie;
ledit appareil de commande (40) juge si ledit temps de mouvement desdits appareils d'imagerie (10) est égal à un instant prédéfini; si c'est le cas, ledit appareil de commande (40) juge que ladite direction de mouvement desdits appareils d'imagerie (10) est opposée à ladite direction de mouvement dudit véhicule de détection de tunnel (1), et ladite valeur de différence entre lesdites amplitudes de ladite vitesse de mouvement est dans ladite plage prédéfinie, et commande en conséquence lesdits appareils d'imagerie (10) pour acquérir lesdites données d'image de ladite paroi intérieure dudit tunnel; sinon, ledit appareil de commande (40) juge que ladite direction de mouvement desdits appareils d'imagerie (10) est identique à ladite direction de mouvement dudit véhicule de détection de tunnel, ou ladite valeur de différence entre lesdites amplitudes de ladite vitesse de mouvement est au-delà de ladite plage prédéfinie, et commande en conséquence lesdits appareils d'imagerie (10) pour qu'ils soient dans un état de non-acquisition.

4. Ledit procédé d'acquisition de données selon l'une des revendications 1 à 4, dans lequel ledit véhicule de détection de tunnel comprend un appareil de détection de vitesse; ledit appareil de détection de vitesse est configuré pour détecter la vitesse desdits appareils d'imagerie; et ledit appareil de détection de vitesse est connecté électriquement audit appareil de commande (40);
l'étape dans laquelle ledit appareil de commande (40) juge s'il faut commander lesdits appareils d'imagerie (10) pour acquérir lesdites données d'image de ladite paroi intérieure dudit tunnel comprend:
ledit appareil de commande (40) détecte si ladite direction de mouvement desdits appareils d'imagerie est opposée à ladite direction de mouvement dudit véhicule de détection de tunnel et si ladite valeur de différence entre lesdites amplitudes de ladite vitesse de mouvement est dans ladite plage prédéfinie par ledit appareil de détection de vitesse; si c'est le cas, ledit appareil de commande (40) commande lesdits appareils d'imagerie (10) pour acquérir lesdites données d'image de ladite paroi intérieure dudit tunnel; sinon, ledit appareil de commande (40) commande lesdits appareils d'imagerie pour qu'ils soient dans un état de non-acquisition.

5. Ledit procédé d'acquisition de données selon l'une quelconque des revendications 2 à 4, dans lequel n groupes d'appareils d'imagerie (10) sont agencés; ledit appareil de commande (40) commande chacun desdits n groupes desdits appareils d'imagerie (10) pour se déplacer dans un mode alternatif le long desdites trajectoires prédéfinies correspondantes; et lesdites phases de mouvement desdits n groupes desdits appareils d'imagerie (10) sont successivement différentes d'environ 360 °/n.

6. Ledit procédé d'acquisition de données selon l'une quelconque des revendications 1 à 5, dans lequel le temps pendant lequel ladite direction dudit appareil d'imagerie (10) est opposée à ladite direction dudit véhicule de détection de tunnel et ladite valeur de différence entre lesdites amplitudes de ladite vitesse de déplacement est dans ladite plage prédéfinie est fixée pour ne pas être plus courte que ledit temps de détection de lumière dudit appareil d'imagerie.

7. Véhicule de détection de tunnel (1), appliqué audit procédé d'acquisition de données selon l'une quelconque des revendications 1 à 6, comprenant un corps de véhicule (30), au moins un groupe d'appareils d'imagerie (10) et un appareil de commande (40), dans lequel lesdits appareils d'imagerie (10) sont agencés sur ledit corps de véhicule (30); lesdits appareils d'imagerie (10) sont connectés électriquement audit appareil de commande (40);
ledit appareil de commande (40) est configuré pour commander lesdits appareils d'imagerie pour se déplacer dans un mode alternatif le long d'une trajectoire prédéfinie; lorsqu'une direction de déplacement desdits appareils d'imagerie (10) est opposée à une direction de déplacement dudit corps de véhicule de détection de tunnel (30), et qu'une valeur de différence entre lesdites amplitudes de vitesse de déplacement se situe dans une plage prédéfinie, ledit appareil de commande (40) envoie une instruction de commande d'imagerie auxdits appareils d'imagerie (10); lesdits appareils d'imagerie (10) complètent l'imagerie; lorsque ladite direction de mouvement desdits appareils d'imagerie (10) est la même que ladite direction de mouvement dudit corps de véhicule de détection de tunnel ou ladite valeur de différence entre lesdites amplitudes de ladite vitesse de mouvement est au-delà de ladite plage prédéfinie, ledit appareil de commande (40) commande ladite imagerie des appareils (10) devant être dans un état de non-acquisition;
lesdits appareils d'imagerie (10) sont configurés pour acquérir lesdites données d'image de ladite paroi intérieure dudit tunnel après avoir reçu ladite instruction de commande d'imagerie.

8. Ledit véhicule de détection de tunnel (1) selon la revendication 7, dans lequel ledit corps de véhicule (30) est pourvue d'au moins un groupe de pistes; lesdites pistes sont agencées le long de ladite direction de déplacement dudit corps de véhicule (30); chaque groupe desdits appareils d'imagerie (10) correspond à un groupe desdites pistes;
ledit appareil de commande (40) est configuré pour commander lesdits appareils d'imagerie (10) pour se déplacer dans un mode alternatif le long desdites pistes; lorsque ladite direction de déplacement desdits appareils d'imagerie est la même que ladite direction de déplacement dudit corps de véhicule de détection de tunnel et ladite valeur de différence entre lesdites amplitudes de ladite vitesse de déplacement est dans ladite plage prédéfinie, ledit appareil de commande (40) envoie une instruction de commande d'imagerie à lesdits appareils d'imagerie (10); lesdits appareils d'imagerie (10) complètent l'imagerie; et lorsque ladite direction de mouvement desdits appareils d'imagerie (10) est la même que ladite direction de mouvement dudit corps de véhicule de détection de tunnel (30) ou ladite valeur de différence entre lesdites amplitudes de ladite vitesse de mouvement est au-delà de ladite plage prédéfinie, ledit appareil de commande (40) commande lesdits appareils d'imagerie (10) pour qu'ils soient dans un état de non-acquisition.

9. Ledit véhicule de détection de tunnel (1) selon la revendication 7 ou 8, dans lequel deux groupes d'appareils d'imagerie sont agencés; lesdits deux groupes d'appareils d'imagerie sont respectivement un premier appareil d'imagerie (10) et un second appareil d'imagerie (10); lesdites pistes comprennent une première piste et une seconde piste; ledit premier appareil d'imagerie correspond à ladite première piste; ledit second appareil d'imagerie correspond à ladite seconde piste;
ledit appareil de commande (40) est configuré pour commander ledit premier appareil d'imagerie pour se déplacer dans un mode alternatif le long de ladite première piste et ledit second appareil d'imagerie pour se déplacer dans un mode alternatif le long de ladite seconde piste, dans lequel ladite différence entre lesdites phases de mouvement de ladite première appareil d'imagerie et ledit second appareil d'imagerie est d'environ 180°.

10. Ledit véhicule de détection de tunnel selon l'une quelconque des revendications 8 ou 9, dans lequel chaque groupe desdits appareils d'imagerie (10) comprend au moins une unité d'imagerie (120) et un châssis (110) pour agencer ladite unité d'imagerie (120); ledit châssis (110) est relié auxdites pistes et peut se déplacer dans un mode alternatif le long de ladite direction longitudinale desdites pistes; et ladite unité d'imagerie (120) est connectée électriquement audit appareil de commande.

11. Ledit véhicule de détection de tunnel (1) selon la revendication 10, dans lequel ledit châssis (110) est cylindrique; une pluralité de groupes desdits appareils d'imagerie sont disposés de manière dispersée le long de ladite direction longitudinale dudit châssis (110); chaque groupe desdits appareils d'imagerie comprend une pluralité d'unités d'imagerie (120); et ladite pluralité d'unités d'imagerie (120) de chaque groupe desdits appareils d'imagerie sont agencées de manière dispersée sur ladite paroi latérale dudit châssis (110) le long de ladite direction circonférentielle dudit châssis (110).

12. Ledit véhicule de détection de tunnel (1) selon la revendication 10 ou 11, dans lequel ledit véhicule de détection de tunnel comprend également un appareil de télémétrie laser (50); ledit appareil de télémétrie laser (50) est connecté électriquement audit appareil de commande; ledit appareil de télémétrie laser (50) est connecté auxdits appareils d'imagerie de sorte que ledit appareil de télémétrie laser (50) se déplace dans un mode alternatif avec lesdits appareils d'imagerie;
ledit appareil de commande est également configuré pour: envoyer une instruction de commande de télémétrie audit appareil de télémétrie laser et envoyer une instruction de commande d'imagerie auxdits appareils d'imagerie lorsque ladite direction de déplacement desdits appareils d'imagerie est opposée à ladite direction de déplacement dudit corps de véhicule de détection de tunnel et ladite valeur de différence entre lesdites amplitudes de ladite vitesse de déplacement se situe dans ladite plage prédéfinie; après avoir reçu ladite instruction de commande de télémétrie, ledit appareil de télémétrie laser émet un faisceau laser vers ladite paroi intérieure dudit tunnel le long d'une direction prédéfinie, forme un point laser sur ladite paroi intérieure dudit tunnel, et acquiert des données de distance entre une origine de coordonnées dudit appareil de télémétrie laser et ladite paroi intérieure dudit tunnel;
après réception de ladite instruction de commande d'imagerie, lesdits appareils d'imagerie acquièrent de manière synchrone une image de ladite paroi intérieure dudit tunnel avec ledit spot laser.

13. Ledit véhicule de détection de tunnel (1) selon la revendication 12, dans lequel ledit appareil de télémétrie laser (50) comprend une pluralité d'unités de télémétrie laser; une pluralité desdites unités de télémétrie laser et une pluralité desdites unités d'imagerie sont en correspondance un à un; et les points de signaux laser émis par lesdites unités de télémétrie laser correspondantes sont dans une zone qui est définie dans ladite zone d'imagerie.

14. Ledit véhicule de détection de tunnel (1) selon l'une quelconque des revendications 7 à 13, dans lequel ledit véhicule de détection de tunnel (1) comprend également un appareil de projection de lumière structurée (60); ledit appareil de projection de lumière structurée (60) est connecté électriquement audit appareil de commande; ledit appareil de projection de lumière structurée (60) est connecté auxdits appareils d'imagerie de sorte que ledit appareil de projection de lumière structurée se déplace dans un mode alternatif avec lesdits appareils d'imagerie;
ledit appareil de projection de lumière structurée (60) émet de la lumière structurée et projette ladite lumière structurée sur ladite paroi intérieure dudit tunnel selon un angle prédéfini;
après réception de ladite instruction de commande d'imagerie, lesdits appareils d'imagerie acquièrent une image de ladite paroi intérieure dudit tunnel avec ladite lumière structurée.

15. Ledit véhicule de détection de tunnel (1) selon l'une quelconque des revendications 10 ou 11, dans lequel lesdits appareils d'imagerie peuvent également comprendre une pluralité d'éléments de conversion de trajet lumineux; et lesdits éléments de conversion de trajet lumineux sont installés sur ledit châssis ou ledit corps de véhicule, et correspondent à ladite pluralité d'unités d'imagerie.
